# EUROPEAN PATENT APPLICATION

(11) **EP 3 989 655 A1**
(43) Date of publication of application: **27.04.2022**
(21) Application number: 19933590.2
(22) Date of filing: 18.06.2019
(51) Int. Cl.: H04W 72/04, H04W 72/12, H04W 28/06

(54) **TERMINAL AND WIRELESS COMMUNICATION METHOD**

(71) Applicant: NTT DOCOMO, INC., Chiyoda-Ku Tokyo 100-6150 (JP)
(72) Inventor: TAKAHASHI, Yuki, Tokyo 100-6150 (JP); NAGATA, Satoshi, Tokyo 100-6150 (JP); WANG, Lihui, Beijing 100190 (CN)
(74) Representative: Hoffmann Eitle
(86) International application number: PCT/JP2019/024137
(87) International publication number: WO 2020/255263

(57) **Abstract**

A terminal includes: a receiving section that receives information indicating a configuration used for determining a size of a resource block group (RBG) used for frequency domain resource allocation for a downlink shared channel or an uplink shared channel, commonly or individually for a plurality of traffic types; and a control section that determines the size of the RBG based on the configuration. As a result, it is possible to appropriately control frequency domain resource allocation for the downlink shared channel or the uplink shared channel.

## Description

### Technical Field

The present disclosure relates to a terminal and a radio communication method in next-generation mobile communication systems.

### Background Art

In the universal mobile telecommunications system (UMTS) network, the specifications of long term evolution (LTE) have been drafted for the purpose of further increasing data rates, providing low delays, and so on (see Non Patent Literature 1). In addition, the specifications of LTE-Advanced (3rd generation partnership project (3GPP) Release (Rel) 10 to 14) have been drafted for the purpose of further increasing capacity and advancement of LTE (3GPP Rel. 8 and 9).

Successor systems to LTE (for example, also referred to as 5th generation mobile communication system (5G), 5G+ (plus), New Radio (NR), or 3GPP Rel. 15 or later) are also being studied.

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April 2010

### Summary of Invention

### Technical Problem

In a future radio communication system (hereinafter, also referred to as New Radio (NR)), a plurality of types are supported as a type (resource allocation (RA) type) of frequency domain resource allocation (FDRA) for a downlink shared channel (for example, physical downlink shared channel (PDSCH)) or an uplink shared channel (for example, physical uplink shared channel (PUSCH)).

Specifically, in the NR, a first type (also referred to as type 0, RA type 0, or the like) of performing the FDRA by using a bitmap in units of resource block groups (RBGs) including one or more resource blocks (RBs) and a second type (also referred to as type 1, RA type 1, or the like) of performing the FDRA by using a resource indication value (RIV) in units of RBs are supported.

However, in the FDRA for the PDSCH or PUSCH using the existing RA type 0 or 1 (in NR Rel. 15), there is a possibility that a requirement for each traffic type cannot be appropriately satisfied. Here, as the traffic type, for example, enhanced mobile broadband (eMBB), ultra-reliable and low-latency communications (URLLC), and the like are assumed, but the traffic type is not limited thereto.

Therefore, an object of the present inventors is to provide a terminal and a radio communication method capable of appropriately controlling frequency domain resource allocation for a downlink shared channel or an uplink shared channel.

### Solution to Problem

A terminal according to an aspect of the present disclosure includes: a receiving section that receives information indicating a configuration used for determining a size of a resource block group (RBG) used for frequency domain resource allocation for a downlink shared channel or an uplink shared channel, commonly or individually for a plurality of traffic types; and a control section that determines the size of the RBG based on the configuration.

### Advantageous Effects of Invention

According to one aspect of the present disclosure, it is possible to appropriately control frequency domain resource allocation for a downlink shared channel or an uplink shared channel.

### Brief Description of Drawings

Figs. 1A and 1B are diagrams illustrating an example of FDRA of resource allocation (RA) type 0.
Fig. 2 is a diagram illustrating an example of FDRA of RA type 1.
Figs. 3A to 3C are diagrams illustrating an example of signaling of an RA type and a resource block group (RBG) size.
Figs. 4A and 4B are diagrams illustrating examples of RA types 2 and 3.
Fig. 5 is a diagram illustrating a first example of semi-static RBG size determination according to a first aspect.
Fig. 6 is a diagram illustrating a second example of semi-static RBG size determination according to the first aspect.
Fig. 7 is a diagram illustrating a third example of semi-static RBG size determination according to the first aspect.
Fig. 8 is a diagram illustrating a fourth example of semi-static RBG size determination according to the first aspect.
Fig. 9 is a diagram illustrating a first example of dynamic RBG size determination according to the first aspect.
Fig. 10 is a diagram illustrating a second example of dynamic RBG size determination according to the first aspect.
Fig. 11 is a diagram illustrating an example of semi-static RA type switching according to a third aspect.
Fig. 12 is a diagram illustrating an example of dynamic RA type switching according to the third aspect.
Figs. 13A and 13B are diagrams illustrating an example of implicit RA type switching according to the third aspect.
Fig. 14 is a diagram illustrating an example of a schematic configuration of a radio communication system according to one embodiment.
Fig. 15 is a diagram illustrating an example of a configuration of a base station according to one embodiment.
Fig. 16 is a diagram illustrating an example of a configuration of a user terminal according to one embodiment.
Fig. 17 is a diagram illustrating an example of a hardware configuration of the base station and the user terminal according to one embodiment.

### Description of Embodiments

### (Frequency Domain Resource Allocation)

In a future radio communication system (for example, New Radio (NR)), it is considered to support a plurality of types for frequency domain resource allocation (FDRA). For example, in the NR, a first type (also referred to as type 0, resource allocation (RA) type 0, or the like) using a bitmap and a second type (also referred to as type 1, RA type 1, or the like) using a resource indication value (RIV) are assumed.

The RA types 0 and 1 may be used for the FDRA for at least one of an uplink shared channel (for example, physical uplink shared channel (PUSCH)) or a downlink shared channel (for example, physical downlink shared channel (PDSCH)), for example.

In the RA type 0, a resource block group (RBG) including one or more resource blocks (RBs) is used to reduce the size (the number of bits) of the bitmap. The number of RBs (RBG size) per RBG may be determined based on the number of RBs (bandwidth part (BWP) size) constituting a BWP in a carrier.

Note that the RB may be referred to as a physical resource block (PRB). Note that the carrier may also be referred to as a cell, a serving cell, a component carrier (CC), or the like. The BWP is a partial band in the carrier, and one or more BWPs may be configured in the carrier for a terminal (which may also be referred to as a user terminal, user equipment (UE), or the like).

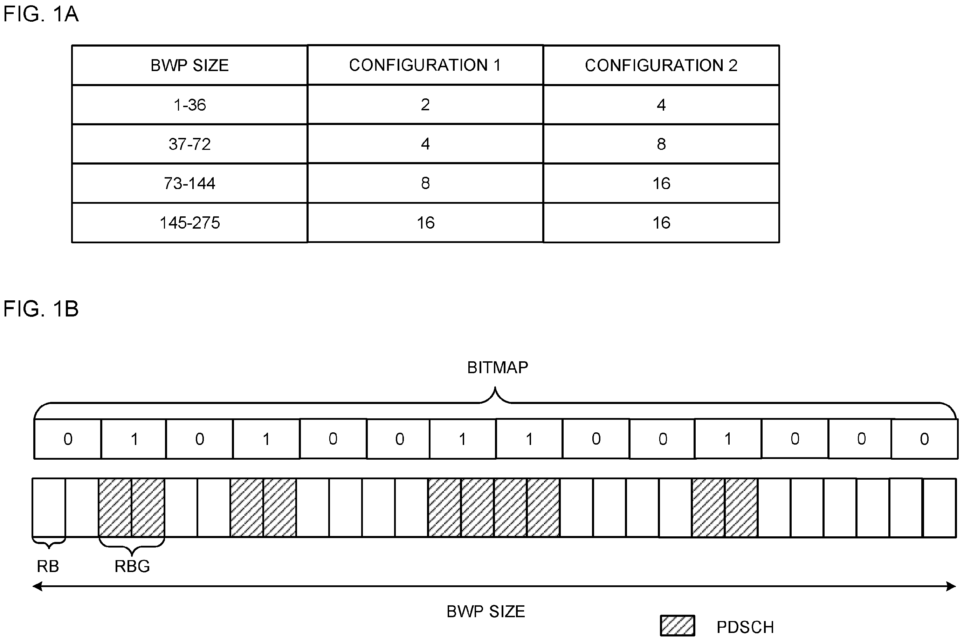

Figs. 1A and 1B are diagrams illustrating an example of the FDRA of RA type 0. As illustrated in Fig. 1A, the RBG size corresponding to the BWP size may be associated (determined) for each configuration. Hereinafter, the configuration may be referred to as RBG size configuration or the like.

For example, in a case where information indicating the RBG size (RBG size information such as a radio resource control (RRC) information element (IE) "rbg-Size") indicates an RBG size configuration 1 (configuration 1), the UE may determine any one of 2, 4, 8, and 16 as the RBG size based on the size of the BWP to which the PDSCH or the PUSCH is allocated.

Similarly, in a case where the RBG size information indicates an RBG size configuration 2 (configuration 2), the UE may determine any one of 4, 8, and 16 as the RBG size based on the size of the BWP. Note that the table illustrated in Fig. 1A is merely an example, and values of the BWP size and the RBG size are not limited to those illustrated in Fig. 1A.

Fig. 1B illustrates an example of the FDRA for the PDSCH in a case where the BWP size is 28 RBs and the RBG size is two RBs. Note that although Fig. 1B illustrates the FDRA for the PDSCH, the FDRA can be similarly performed for the PUSCH.

As illustrated in Fig. 1B, in RA type 0, a bitmap having the number of bits equal to the number of RBGs in the BWP is used, and each bit of the bitmap may indicate whether or not the PDSCH is allocated to the corresponding RBG. For example, in Fig. 1B, the PDSCH is allocated to the RBG corresponding to a bit value "1," and the PDSCH is not allocated to the RBG corresponding to a bit value "0."

As described above, in RA type 0, the FDRA for the PDSCH or the PUSCH is controlled in units of RBGs. In RA type 0, as illustrated in Fig. 1B, the PDSCH or the PUSCH for the RBG discontiguous in the frequency domain can be allocated.

On the other hand, in RA type 1, a frequency domain resource allocated to the PUSCH is indicated by using a start index (an index of a start RB (RBₛₜₐᵣₜ)) and the number of contiguously allocated RBs (length (L_{RBs})). The start index and the number of RBs may be derived by the RIV.

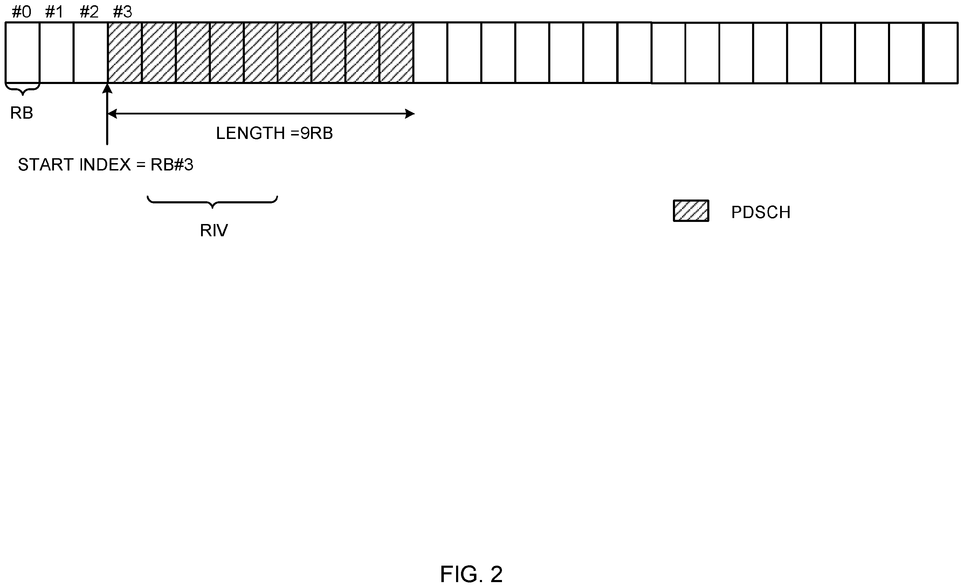

Fig. 2 is a diagram illustrating an example of the FDRA of RA type 1. In Fig. 2, a given number of RBs (here, nine contiguous RBs) indicated by the length may be allocated to the PDSCH, from the start RB (here, RB #3) indicated by the index of the start RB. Note that although Fig. 2 illustrates the FDRA for the PDSCH, the FDRA can be similarly performed for the PUSCH.

As illustrated in Fig. 2, in RA type 1, the FDRA for the PDSCH or the PUSCH can be controlled in units of RBs. In RA type 1, the PDSCH or the PUSCH can be allocated only to RBs contiguous in the frequency domain.

Notification (configuration) of the RA type as described above may be performed semi-statically based on higher layer signaling, or the RA type may be dynamically specified based on downlink control information (DCI). Further, the UE may be notified of the RBG size information by higher layer signaling, for example.

Here, in the present disclosure, for example, it is sufficient that the higher layer signaling is at least one of radio resource control (RRC) signaling, system information (for example, at least one of remaining minimum system information (RMSI), other system information (OSI), master information block (MIB), or system information block (SIB)), broadcast information (physical broadcast channel (PBCH)), or medium access control (MAC) signaling.

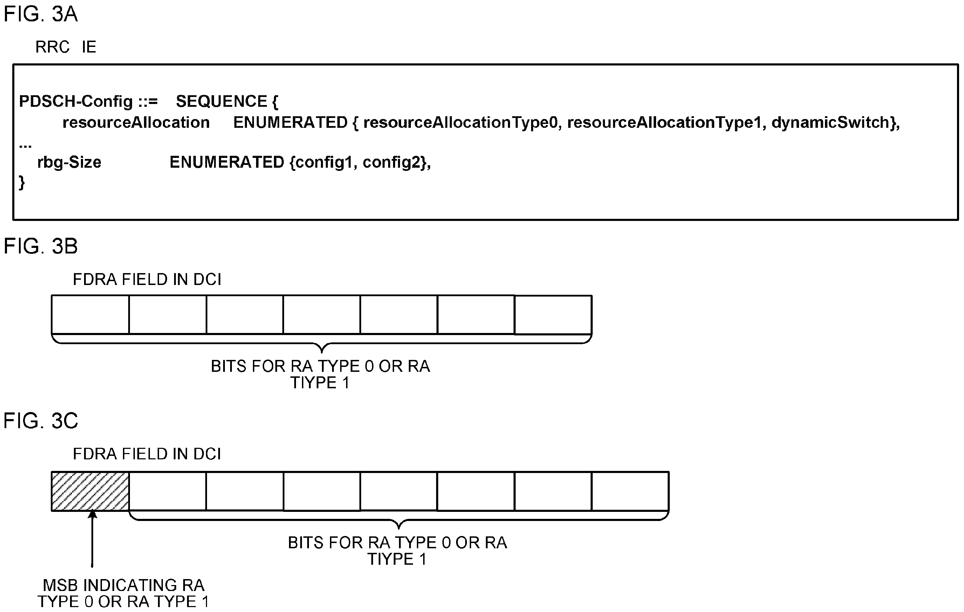

Figs. 3A to 3C are diagrams illustrating an example of signaling of the RA type and the RBG size. As illustrated in Fig. 3A, the UE may be notified of information regarding the RA type (RA type information such as an RRC IE "resourceAllocation") by higher layer signaling (for example, RRC signaling).

In Fig. 3A, configuration information regarding the PDSCH (for example, an RRC IE "PDSCH-Config") includes the RA type information (for example, the RRC IE "resourceAllocation") and the RBG size information (for example, the RRC IE "rbg-Size"), but is not limited thereto. At least one of the RA type information or the RBG size information may be included in configuration information regarding the PDSCH or the PUSCH (for example, the RRC IE "PDSCH-Config," "PUSCH-Config," or "ConfiguredGrantConfig"). The PDSCH or PUSCH may be scheduled by the DCI or may be scheduled by semi-persistent scheduling (or scheduling by a configuration grant).

The RA type information may indicate RA type 0 (resourceAllocationType0), RA type 1 (resourceAllocationType1), or dynamic switching (dynamicSwitch) .

In a case where the RA type information indicates RA type 0 or 1, RA type 0 or 1 may be semi-statically configured in the UE. In this case, as illustrated in Fig. 3B, all bits of a given field (for example, an FDRA field) in the DCI may be used for the FDRA according to RA type 0 or 1.

For example, all bits of the FDRA field may be used as the bitmap of RA type 0 or the RIV of RA type 1. Note that although Fig. 3B illustrates that the FDRA field includes seven bits, but the number of bits of the FDRA field is not limited thereto.

On the other hand, in a case where the RA type information indicates the dynamic switching, RA type 0 or 1 may be dynamically switched. In this case, as illustrated in Fig. 3C, some bits of a given field (for example, the FDRA field) in the DCI may be used to identify the RA type. For example, in Fig. 3B, a value "0" of the most significant bit (MSB) of the FDRA field may indicate RA type 0, and a value "1" of the MSB may indicate RA type 1.

As illustrated in Fig. 3C, in a case where the RA type is specified by some bits of a given field in the DCI, the remaining bits (here, seven bits other than the MSB) may be used for the FDRA according to RA type 0 or 1. For example, the remaining bits may be used as the bitmap of RA type 0 or the RIV of RA type 1. Note that although Fig. 3C illustrates that the FDRA field includes eight bits, but the number of bits of the FDRA field is not limited thereto.

In the NR, it is assumed to involve traffic types (also referred to as services, use cases, service types, traffics, or the like) such as enhanced mobile broadband (eMBB), massive machine type communications (mMTC) realizing multiple simultaneous connection, ultra-reliable and low-latency communications (URLLC), and industrial Internet of Things (IIoT). At least one requirement such as latency, reliability, or a packet size may be different between different traffic types.

It has also been studied to schedule the PDSCH or the PUSCH by using a new DCI format different from the existing DCI format (for example, DCI format 1_0 or 1_1 used for PDSCH scheduling, and 0_0 or 0_1 used for PUSCH scheduling) in order to satisfy the requirement for each traffic type. The new DCI format is referred to as, for example, a DCI format 1_x or 0_x, compact DCI, and the like, but the name thereof is not limited thereto. Here, x is an arbitrary character string, and may be "2," for example.

For example, the DCI format 1_x may be used for scheduling the PDSCH associated with a certain traffic type (for example, URLLC data (a logical channel for the URLLC)), and the DCI format 0_x may be used for scheduling the PUSCH associated with the URLLC data. The DCI format 1_x may be smaller in size than the DCI format 1_0 or 1_1. Further, the DCI format 0_x may be smaller in size than the DCI format 0_0 or 0_1.

In addition, in order to reduce the number of bits of the FDRA field in at least one of the new DCI format 1_x or 0_x (DCI format 1_x/0_x), introduction of a new RA type in addition to RA types 0 and 1 has been studied.

The new RA type may include a third type (also referred to as modified RA type 0, RA type 2, type 2, or the like) based on RA type 0 and a fourth type (also referred to as modified RA type 1, RA type 3, type 3, or the like) based on RA type 1.

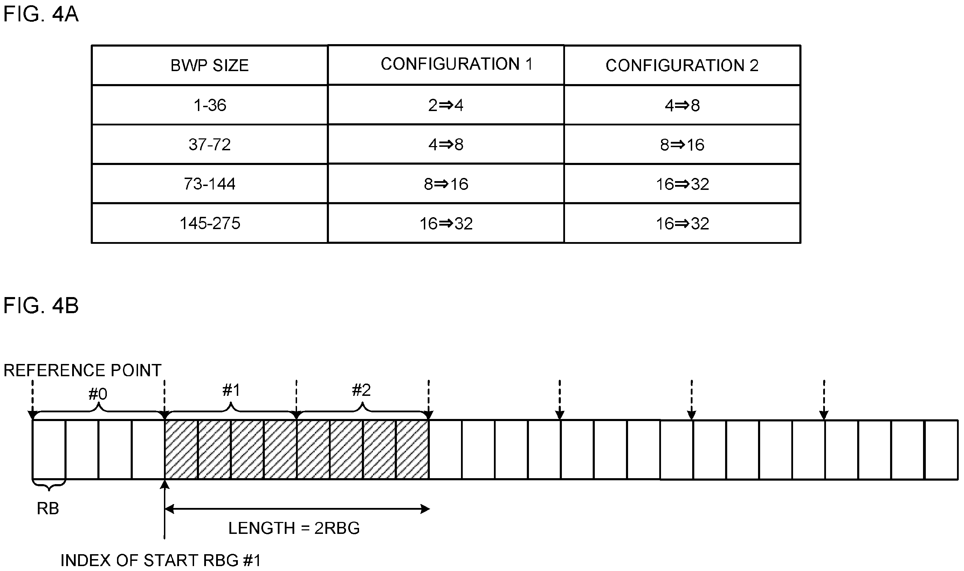

Figs. 4A and 4B are diagrams illustrating examples of RA types 2 and 3. As illustrated in Fig. 4A, in RA type 2 based on RA type 0, the RBG size for each BWP size may be determined to be coarser (larger) than the RBG size of RA type 1.

For example, as illustrated in Fig. 4A, in RA type 2, the RBG size corresponding to each BWP size may be determined to be K times (where K = 2) the RBG size (see, for example, Fig. 1A) of RA type 0 for each RBG size configuration (configuration).

As described above, by making the RBG size associated with each BWP size coarse, the size of the bitmap of RA type 2 can be reduced as compared with the bitmap of RA type 0 in a case of the same BWP size. Therefore, RA type 2 is suitable for the DCI format 1_x/0_x.

As illustrated in Fig. 4B, in RA type 3 based on RA type 1, as granularity of at least one of the start index or the length, the RBG may be used instead of the RB used in RA type 1. For example, in Fig. 4B, the start index (the index of the start RBG) and the length of the frequency domain resource allocated to the PDSCH or the PUSCH may be specified in units of RBGs comprising four RBs.

In this manner, the RBG is used as the granularity of the start index and the length indicated by the RIV, the size of the RIV of RA type 2 can be reduced as compared with the RIV of RA type 0 in a case of the same BWP size. Therefore, RA type 3 is suitable for the DCI format 1_x/0_x.

Note that RA type 2 is not limited to an RA type different from RA type 0, and may be defined as a subtype of RA type 0 or a different RBG size configuration. Similarly, RA type 3 is not limited to an RA type different from RA type 1, and may be defined as a subtype of RA type 1 or a configuration of a different scheduling granularity.

In the NR as described above, there is a possibility that the requirement of at least one traffic type cannot be satisfied in a case where a plurality of PDSCHs or PUSCHs associated with a plurality of traffic types with different requirements can be transmitted (also referred to as multiplexed or mapped) in the same carrier (or BWP).

Specifically, in NR Rel. 15, the number of RBG size configurations that can be simultaneously set in RA type 0 is limited to one (for example, the configuration 1 or configuration 2 in Fig. 1A). Therefore, all the traffic types having the same granularity (the same RBG size configuration) for the RBG size are applied. For example, in NR Rel. 15, in a case where the eMBB and the URLLC of RA type 0 are multiplexed in the same BWP, the same RBG size configuration (same granularity) is applied to the eMBB and the URLLC. As a result, there is a possibility that different requirements of the eMBB and the URLLC cannot be satisfied.

In addition, how to control the RBG size configuration between the RA types (for example, RA types 0, 2, and 3) according to which the FDRA is performed in units of RBGs becomes a problem. Furthermore, how to control switching between a plurality of RA types (for example, RA types 0 to 3) becomes a problem.

Therefore, the present inventors have conceived that the FDRA for the PDSCH or the PUSCH is appropriately controlled by appropriately controlling the RBG size configuration of each of different traffic types when performing the FDRA in units of RBGs (first aspect), appropriately controlling the RBG size configuration between the RA types according to which the FDRA is performed in units of RBGs (second aspect), and appropriately controlling the switching between the RA types (third aspect).

Hereinafter, an embodiment according to the present disclosure will be described in detail with reference to the drawings. Note that, in the following first to third aspects, the FDRA for the PDSCH will be described, but the same applies to the FDRA for the PUSCH.

### (First Aspect)

In the first aspect, a control of the RBG size configuration (also simply referred to as configuration) in the RA type (for example, at least one of RA types 0 and 2) according to which the FDRA is performed in units of RBGs will be described.

The UE may receive information indicating the RBG size configuration (RBG size information) used to determine the RBG size used for the FDRA for the PDSCH, commonly or individually for a plurality of traffic types. The UE determines the RBG size used for the FDRA for the PDSCH based on the RBG size configuration or the RBG size information.

The RBG size may be determined semi-statically (semi-static RBG size determination), dynamically (dynamic RBG size determination), or implicitly (implicit RBG size determination). The RBG size may be determined based on at least one of higher layer signaling, the DCI, or implicit information.

### <Semi-Static RBG Size Determination>

In the semi-static RBG size determination, the RBG size used for the FDRA for the PDSCH associated with each traffic type may be determined by higher layer signaling.

### <<Common RBG Size Configuration/Common RBG Table>>

The RBG size information may indicate the RBG size configuration common to a plurality of traffic types. The UE may determine the RBG size commonly for the plurality of traffic types based on the RBG size configuration.

The RBG size for each BWP size associated with each RBG size configuration may be common to the traffic types. For example, a table (RBG table) associating each RBG size configuration with the RBG size for each BWP size may be commonly used among the traffic types.

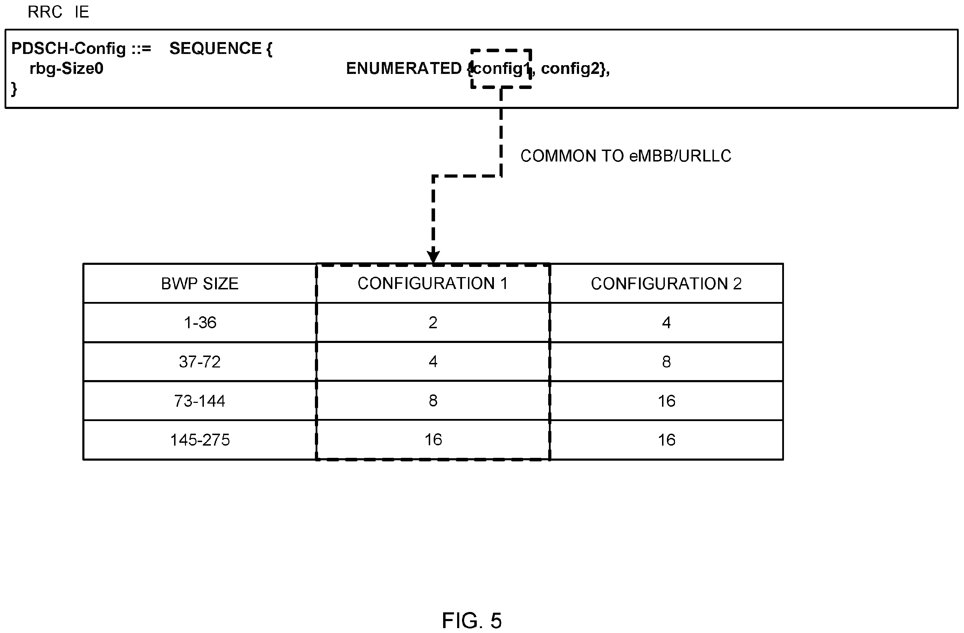

Fig. 5 is a diagram illustrating a first example of the semi-static RBG size determination according to the first aspect. The UE may be notified of the RBG size information by higher layer signaling. In Fig. 5, the RBG size information is indicated by, for example, an RRC IE "rbg-Size0," but the RBG size information is not limited thereto.

As illustrated in Fig. 5, each RBG size configuration (here, the configuration 1 or 2) may indicate the RBG size common to the traffic types. For example, in Fig. 5, the RBG size information indicates the configuration 1. Therefore, the RBG size used for the FDRA for the PDSCH may be determined based on the RBG size for each BWP size associated with the configuration 1 and the BWP size to which the PDSCH is allocated.

In Fig. 5, in a case of the same BWP size to which the PDSCH is allocated, the same RBG size may be applied to the FDRA for the PDSCH regardless of which traffic type (for example, the eMBB or the URLLC) the PDSCH is associated with.

### «Common RBG Size Configuration/Individual RBG Table»

The RBG size information may indicate the RBG size configuration common to a plurality of traffic types. On the other hand, the UE may determine the RBG size for each traffic type based on the RBG size configuration.

Specifically, each RBG size configuration may be associated with the RBG size for each BWP size for each traffic type. For example, the table (RBG table) associating the RBG size configuration with the RBG size for each BWP size may be used for each traffic type.

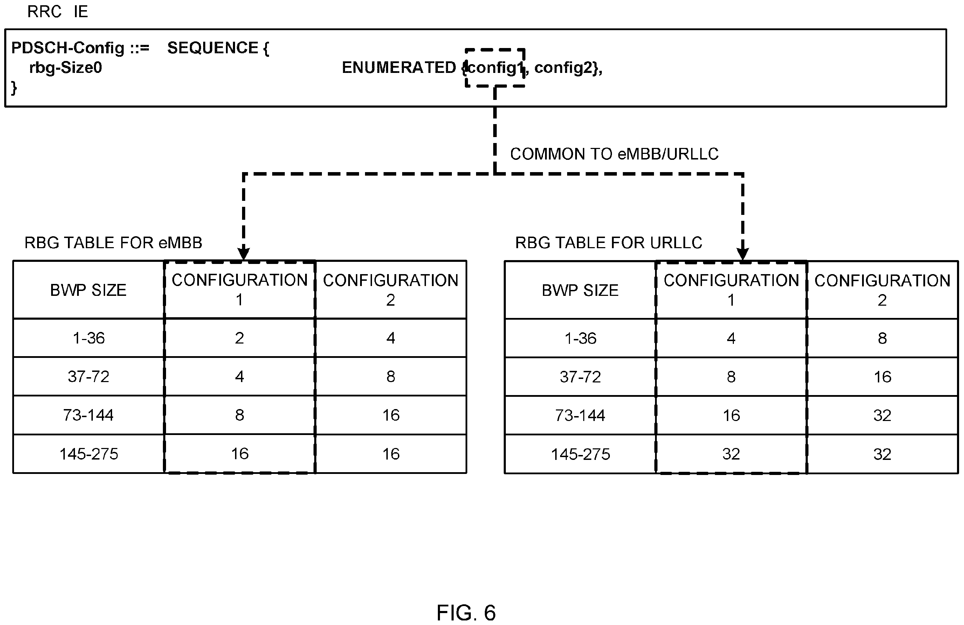

Fig. 6 is a diagram illustrating a second example of the semi-static RBG size determination according to the first aspect. Fig. 6 is different from Fig. 5 in that each RBG size configuration is associated with a plurality of RBG tables. In the following, the difference from Fig. 5 will be mainly described.

As illustrated in Fig. 6, each RBG size configuration (here, the configuration 1 or 2) may indicate a different RBG size for each traffic type. Specifically, different RBG tables may be used for each traffic type. Even in a case of the same RBG size configuration, a different RBG size may be associated with each BWP size in different RBG tables.

For example, Fig. 6 illustrates an RBG table for the eMBB and an RBG table for the URLLC. As illustrated in Fig. 6, in the RBG table for the URLLC, even with the same RBG size configuration (here, the configuration 1 or 2), the RBG size having a larger value (for example, K times (where K = 2)) may be associated with each BWP size as compared with the RBG table for the eMBB.

In Fig. 6, the UE receives, for example, the RBG size information indicating the RBG size configuration 1 (configuration 1). The UE may determine which RBG table to use based on the traffic type associated with the PDSCH. Alternatively, the UE may determine which RBG table to use based on the RA type information (for example, the RBG table for the eMBB may be used in a case of RA type 0, and the RBG table for the URLLC may be used in a case of RA type 2).

Note that "which RBG table to use" may be paraphrased as "which RBG size to use among a plurality of RBG sizes associated with the same RBG size configuration for each BWP size (for example, which one of the RBG sizes 2 and 4 associated with the BWP sizes 1 to 36 of the configuration 1 in Fig. 6 to use)."

For example, in Fig. 6, the UE may determine the RBG size used for the FDRA for the PDSCH associated with the eMBB based on the BWP size among the plurality of RBG sizes indicated by the configuration 1 in the RBG table for the eMBB. On the other hand, the UE may determine the RBG size used for the FDRA for the PDSCH associated with the URLLC based on the BWP size among the plurality of RBG sizes indicated by the configuration 1 in the RBG table for the URLLC.

As described above, in Fig. 6, since each RBG size configuration indicates a different RBG size for each traffic type, the FDRA for the PDSCH can be performed using the BG size suitable for each traffic type.

### <<Individual RBG Size Configuration/Common RBG Table>>

The RBG size information may indicate individual RBG size configurations (for each traffic type) for a plurality of traffic types. The UE may determine the RBG size for each traffic type based on the RBG size configuration.

On the other hand, the RBG size for each BWP size associated with each RBG size configuration may be common to the traffic types. For example, a table (RBG table) associating each RBG size configuration with the RBG size for each BWP size may be commonly used among the traffic types.

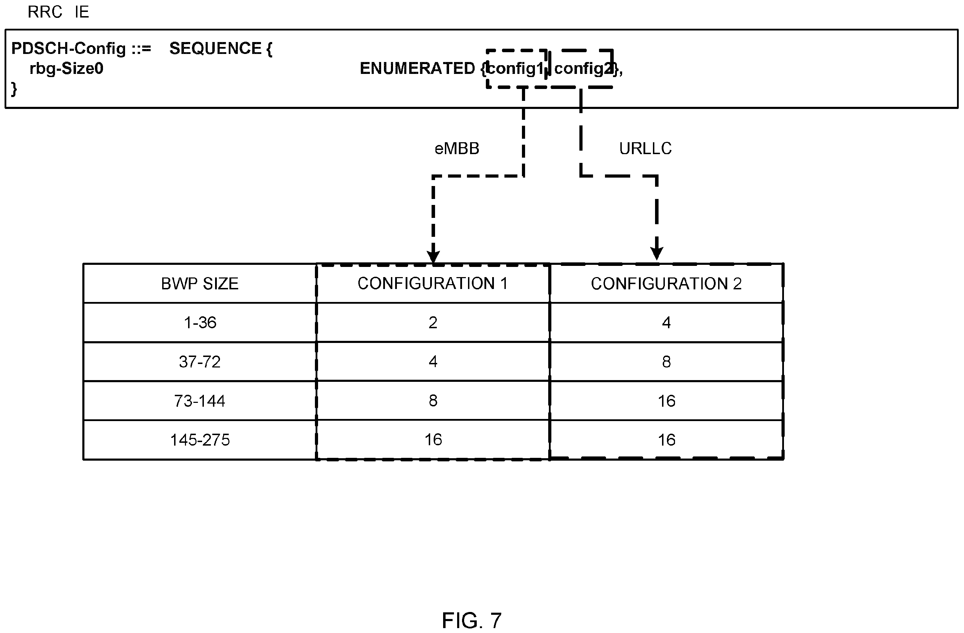

Fig. 7 is a diagram illustrating a third example of the semi-static RBG size determination according to the first aspect. Fig. 7 is different from Fig. 5 in that the RBG size information indicates the individual RBG size configurations for the traffic types, instead of the RBG size configuration common to the traffic types. In the following, the difference from Fig. 5 will be mainly described.

In Fig. 7, the RBG size information for each traffic type is indicated by, for example, the RRC IE "rbg-Size0," but is not limited thereto. As the RBG size information, the RRC IE having a different name may be used for each traffic type.

As illustrated in Fig. 7, even in a case where notification of the RBG size configuration is performed for each traffic type, the RBG size for each BWP size associated with each RBG size configuration may be common to the traffic types. For example, a table (RBG table) associating each RBG size configuration with the RBG size for each BWP size may be commonly used among the traffic types.

In Fig. 7, the UE receives the RBG size information indicating the RBG size configuration 1 (configuration 1) for the eMBB. Therefore, the UE may determine the RBG size used for the FDRA for the PDSCH associated with the eMBB based on the BWP size among the plurality of RBG sizes (here, 2, 4, 8, and 16) indicated by the configuration 1 in the RBG table.

On the other hand, in Fig. 7, the UE receives the RBG size information indicating the RBG size configuration 2 for the URLLC. Therefore, the UE may determine the RBG size used for the FDRA for the PDSCH associated with the URLLC based on the BWP size among the plurality of RBG sizes (here, 4, 8, 16, and 16) indicated by the configuration 2 in the RBG table.

In Fig. 7, even in a case where the RBG table is used commonly for the traffic types, the RBG size suitable for the traffic type can be determined by making the RBG size configuration different for each traffic type.

### <<Individual RBG Size Configuration/Individual RBG Table>>

The RBG size information may indicate individual RBG size configurations (for each traffic type) for a plurality of traffic types. The UE may determine the RBG size for each traffic type based on the RBG size configuration.

Specifically, each RBG size configuration may be associated with the RBG size for each BWP size for each traffic type. For example, the table (RBG table) associating the RBG size configuration with the RBG size for each BWP size may be used for each traffic type.

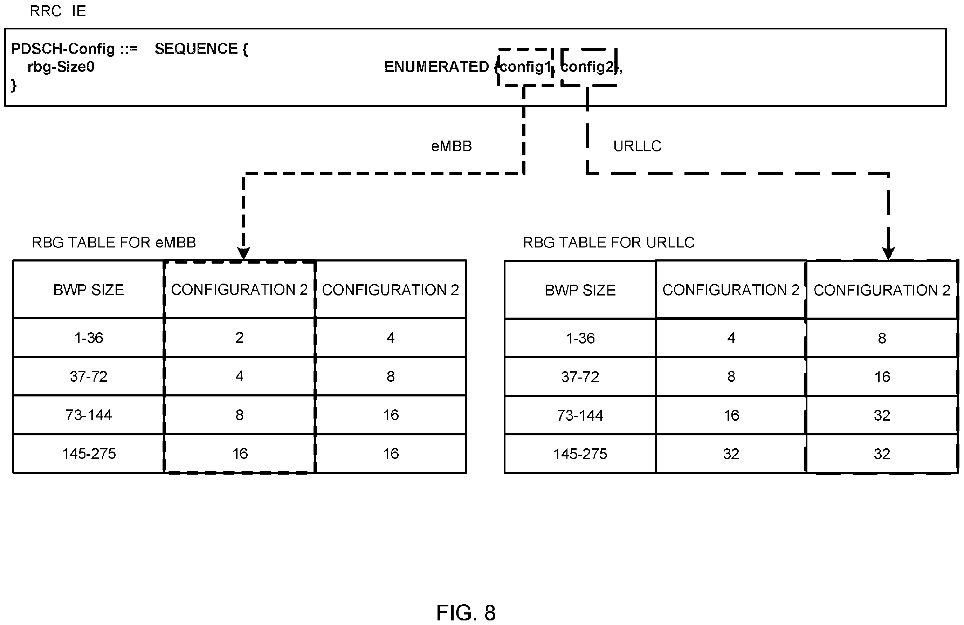

Fig. 8 is a diagram illustrating a fourth example of the semi-static RBG size determination according to the first aspect. Fig. 8 is different from Fig. 6 in that the RBG size configuration for each traffic type is associated with the RBG table for the corresponding traffic type. In the following, the difference from Fig. 6 will be mainly described.

As illustrated in Fig. 8, the RBG size configuration (here, the configuration 1 or 2) for each traffic type may indicate the RBG size for the corresponding traffic type. Specifically, different RBG tables may be used for each traffic type. A different RBG size may be associated with each BWP size in different RBG tables.

For example, Fig. 8 illustrates the RBG table for the eMBB and the RBG table for the URLLC. As illustrated in Fig. 8, in the RBG table for the eMBB and the RBG table for the URLLC, the RBG size for each BWP size suitable for the corresponding traffic type may be associated with each configuration (here, the configuration 1 or 2).

For example, in Fig. 8, the UE receives the RBG size information indicating the configuration 1 for the eMBB. On the other hand, the UE receives the RBG size information indicating the configuration 2 for the URLLC. The UE may determine which RBG table to use based on the traffic type associated with the PDSCH or the RBG size information. Alternatively, the UE may determine which RBG table to use based on the RA type information (for example, the RBG table for the eMBB may be used in a case of RA type 0, and the RBG table for the URLLC may be used in a case of RA type 2).

The UE may determine the RBG size used for the FDRA for the PDSCH associated with the eMBB based on the BWP size among the plurality of RBG sizes indicated by the configuration 1 in the RBG table for the eMBB. On the other hand, the UE may determine the RBG size used for the FDRA for the PDSCH associated with the URLLC based on the BWP size among the plurality of RBG sizes indicated by the configuration 2 in the RBG table for the URLLC.

As described above, in Fig. 8, since the RBG size configuration whose notification is performed for each traffic type indicates the RBG size of the corresponding traffic type, the FDRA for the PDSCH can be performed using the BG size suitable for each traffic type.

### <Dynamic RBG Size Determination>

In the dynamic RBG size determination, the RBG size used for the FDRA for the PDSCH associated with each traffic type may be determined based on the DCI. Specifically, the RBG size may be determined based on the RBG size information (for example, the RRC IE "rbg-Size0") and the DCI, or may be determined based on the DCI regardless of the RBG size information.

### <<Higher Layer Signaling and DCI>>

In a case where the RBG size information indicates the dynamic switching (for example, dynamicswitch) of the RBG size configuration, the UE may determine the RBG size configuration based on some bits (for example, a given number of MSBs or least significant bits (LSB)) of a given field (for example, the FDRA field) in the DCI. The some bits may be included in the given field in a case where the RBG size information indicates the dynamic switching of the RBG size configuration.

Note that, in a case where the MSB of the FDRA field of the DCI is used to specify the RA type, another bit (for example, a given number of MSBs from the second MSB or a given number of LSBs) of the FDRA field may be used to specify the configuration.

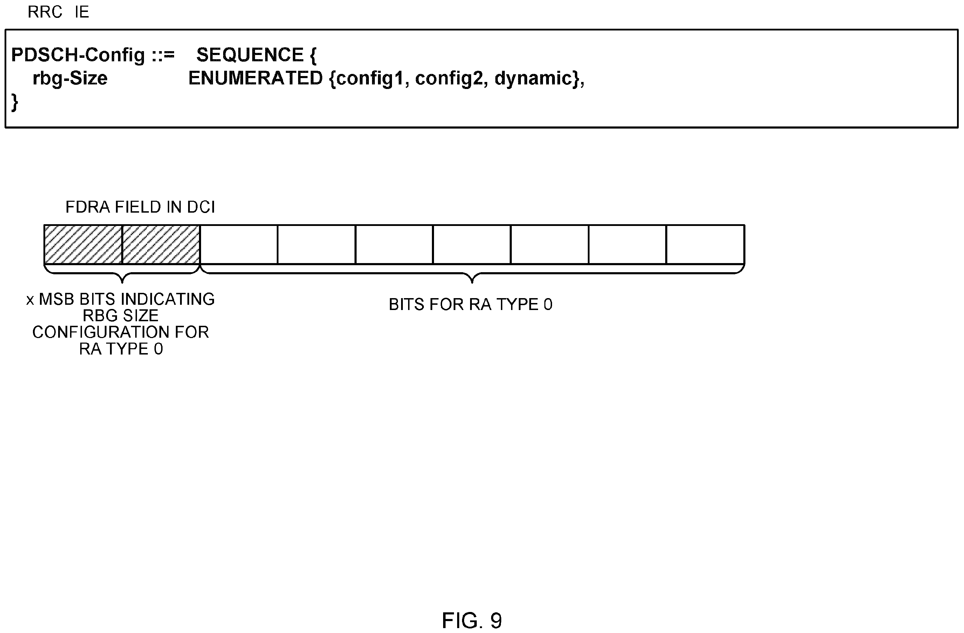

Fig. 9 is a diagram illustrating a first example of the dynamic RBG size determination according to the first aspect. Fig. 9 is different from Figs. 5 to 8 in that the RBG size information (for example, the RRC IE "rbg-Size") indicates the dynamic configuration switching. In the following, the difference from Figs. 5 to 8 will be mainly described.

Note that the RBG size information may be the RBG size information (for example, the RRC IE "rbg-Size0") illustrated in Figs. 5 to 8. Further, although RA type 0 is exemplified in Fig. 9, RA type 2 may be used.

As illustrated in Fig. 9, in a case where the RBG size information indicates the dynamic configuration switching (for example, dynamicswitch), a given number of bits (here, two MSBs) of a given field (for example, the FDRA field) in the DCI for scheduling the PDSCH may indicate the configuration used to determine the RBG size of the PDSCH.

For example, in Fig. 9, two MSBs of the FDRA field indicate the RBG size configuration, but the position and the number of bits indicating the configuration are not limited to those illustrated. For example, the number of bits can be determined based on the number of configurations identified. In addition, the number of bits of the FDRA field is not limited to that illustrated.

In Fig. 9, the UE determines the RBG size used for the FDRA for the PDSCH based on the RBG size configuration indicated by the two MSBs of the FDRA field. The UE may determine the RBG to which the PDSCH is allocated by a bitmap indicated by other bits of the FDRA field.

### <<DCI>>

The RBG size configuration may be explicitly specified by using some bit values of a given field (for example, the FDRA field) in the DCI, may be explicitly specified by using a new field (for example, a field for RBG size configuration) in the DCI, or may be implicitly specified by using the DCI format.

### [Some Bits of Given Field in DCI]

The RBG size configuration may be determined based on some bits (for example, a given number of MSBs or LSBs) of a given field (for example, the FDRA field) in the DCI. The some bits may be included in the given field regardless of whether the bits are of RA type 0 or 2.

The UE may determine the RBG size used for the FDRA for the PDSCH scheduled by the DCI based on the RBG size configuration indicated by the some bits instead of the RBG size configuration indicated by the RBG size information. That is, the RBG size configuration indicated by the some bits in the DCI is overwritten with the RBG size configuration indicated by the RBG size information.

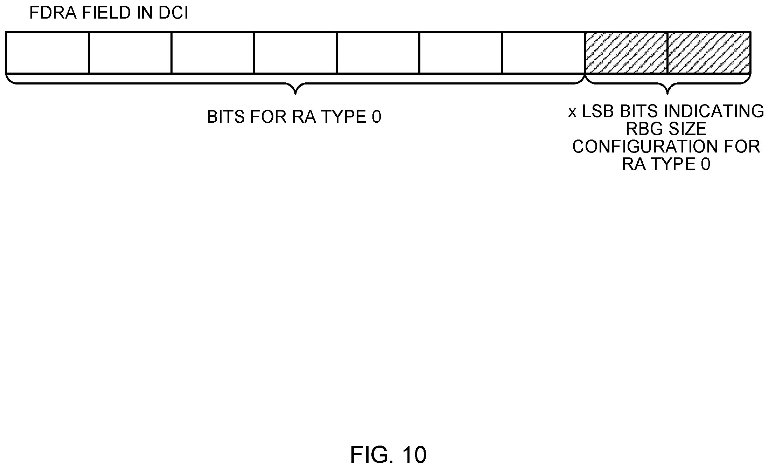

Fig. 10 is a diagram illustrating a second example of the dynamic RBG size determination according to the first aspect. Fig. 10 is different from Fig. 9 in that some bits of a given field (for example, the FDRA field) in the DCI specify the RBG size configuration regardless of the RBG size information (for example, the RRC IE "rbg-Size"). In the following, the difference from Fig. 9 will be mainly described.

As illustrated in Fig. 10, a given number of bits (here, two LSBs) of a given field (for example, the FDRA field) in the DCI for scheduling the PDSCH may indicate the RBG size configuration used for determining the RBG size of the PDSCH.

For example, in Fig. 10, two LSBs of the FDRA field indicate the configuration for determining the RBG size, but the position and the number of bits indicating the configuration are not limited to those illustrated. For example, the number of bits can be determined based on the number of configurations identified. In addition, the number of bits of the FDRA field is not limited to that illustrated. Further, although RA type 0 is exemplified in Fig. 10, RA type 2 may be used.

In Fig. 10, the UE determines the RBG size used for the FDRA for the PDSCH based on the RBG size configuration indicated by the two LSBs of the FDRA field. The UE may determine the RBG to which the PDSCH is allocated by a bitmap indicated by other bits of the FDRA field.

### [New Field in DCI]

Alternatively, the RBG size configuration may be determined based on at least some bits of a given field other than the FDRA field in the DCI. The given field may be a field indicating the RA type (RA type field) or a field specifying the RBG size configuration.

In a case where the RA type field is used, some bits of the RA type field may indicate the RA type, and other bits of the RA type field may indicate the RBG size configuration.

### [DCI Format]

Alternatively, the UE may determine the RBG size configuration used for the FDRA for the PDSCH based on the DCI format used for scheduling the PDSCH.

When detecting the DCI format 1_x, the UE may use an RBG size configuration different from the RBG size configuration (for example, the RBG size configuration for the PDSCH scheduled by the DCI formats 1_0 and 1_1) set by the RBG size information.

For example, in a case where the RBG configuration 1 is configured with the UE by the RBG size information, the UE may temporarily use the RBG size configuration 2 for the PDSCH scheduled by the DCI format 1_x when the DCI format 1_x is detected.

### <Implicit RBG Size Determination>

In the implicit RBG size determination, the RBG size configuration used for the FDRA for the PDSCH associated with each traffic type may be determined based on the implicit information.

The implicit information may include, for example, at least one of the following:
- Information regarding a modulation and coding scheme (MCS) applied to the PDSCH
- Information regarding a PDCCH for scheduling the PDSCH
- Information regarding a radio network temporary identifier (RNTI) used for scrambling of a cyclic redundancy check (CRC) bit (CRC scrambling) of the PDCCH

### [Information Regarding MCS]

The UE may determine the RBG size configuration based on the information regarding the MCS (for example, an MCS index). Note that the MCS index may be indicated by a given field (for example, an MCS field or MCS index field) in the DCI.

For example, in a case where the MCS index is equal to or lower than (or is lower than) a given threshold, the RBG size configuration (for example, the RBG size configuration 2) with a larger RBG size may be determined. This is because a lower MCS index is likely to be used for the PDSCH associated with the URLLC.

On the other hand, in a case where the MCS index is higher than (or is equal to or higher than) the given threshold, the RBG size configuration (for example, the RBG size configuration 1) with a smaller RBG size may be determined. This is because a higher MCS index is likely to be used for the PDSCH associated with the eMBB.

### [Information Regarding PDCCH]

The UE may determine the RBG size configuration based on the information regarding the PDCCH. The information regarding the PDCCH may be, for example, at least one of a period for monitoring the PDCCH (occasion, monitoring occasion, or PDCCH monitoring occasion), a search space, or a control resource set (CORESET).

For example, in a case where the PDCCH monitoring occasion is slot-based, the RBG size configuration (for example, the RBG size configuration 1) with a smaller RBG size may be determined. This is because, in a case where the PDCCH monitoring occasion is slot-based, there is a high possibility of being used for the PDSCH associated with the eMBB.

On the other hand, in a case where the PDCCH monitoring occasion is span-based, the RBG size configuration (for example, the RBG size configuration 2) with a larger RBG size may be determined. This is because a lower MCS index is likely to be used for the PDSCH associated with the URLLC. Note that being span-based may mean a period (which is also referred to as a sub-slot, a mini slot, a half-slot, or the like) shorter than a slot. For example, in a case where an RRC IE "pdcch-MonitoringAnyOccasionsWithSpanGap" is configured, the PDCCH monitoring occasion may be assumed to be span-based.

In addition, when the PDCCH is detected by a certain search space set, the RBG size configuration (for example, the RBG size configuration 2) with a larger RBG size may be determined, and when the PDCCH is detected by another search space set, the RBG size configuration (for example, RBG size configuration 1) with a smaller RBG size may be determined.

Further, when the search space set used to detect the PDCCH is associated with a certain CORESET, the RBG size configuration (for example, the RBG size configuration 2) with a larger RBG size may be determined, and when the search space set is associated with another CORESET, the RBG size configuration (for example, the RBG size configuration 1) with a smaller RBG size may be determined.

### [Information Regarding RNTI]

The UE may determine the RBG size configuration based on the information regarding the RNTI.

For example, in a case where the RNTI used for the CRC scrambling of the DCI is a certain RNTI, the RBG size configuration (for example, the RBG size configuration 2) with a larger RBG size may be determined. The certain RNTI may be, for example, an MCS-C-RNTI.

On the other hand, in a case where the RNTI used for the CRC scrambling of the DCI is another RNTI, the RBG size configuration (for example, the RBG size configuration 1) with a smaller RBG size may be determined. The certain RNTI may be, for example, a C-RNTI, a CS-RNTI, or the like.

As described above, according to the first aspect, the RBG size configuration in the RA type (for example, at least one of RA types 0 and 2) according to which the FDRA is performed in units of RBGs can be appropriately controlled.

### (Second Aspect)

In the second aspect, a relationship of the RBG size (also referred to as a scheduling unit or the like) between the RA types according to which the FDRA is performed in units of RBGs will be described.

As described above, in RA types 0, 2, and 3, the RBG is used as the scheduling unit. On the other hand, in RA type 1, the RB is used as the scheduling unit.

The RBG size configuration (granularity of the scheduling unit) may be the same or different between at least two RA types (for example, RA types 0, 2, and 3 described above) using the RBG as the scheduling unit.

For example, in a case where the RA type configuration 1 is configured for RA type 0, the RA type configuration 1 may also be used for RA types 2 and 3.

Alternatively, in a case where the RA type configuration 1 is configured for RA type 0, the RA type configuration 2 may also be used for RA types 2 and 3.

Alternatively, in a case where the RA type configuration 1 is configured for RA type 0, the RA type configuration 1 may be used for RA type 2, and the RA type configuration 2 may be used for RA type 3.

According to the second aspect, the RBG size can be appropriately controlled between the RA types using the RBG as the scheduling unit.

### (Third Aspect)

In the third aspect, switching between the RA types will be described.

The switching between the RA types (for example, RA types 0, 1, 2, and 3 described above) may be performed by higher layer signaling (semi-static RA type switching), may be performed dynamically by the DCI (dynamic RA type switching), or may be performed based on the implicit information such as a scheduling condition (implicit RA type switching). Note that the "RA type switching" may be paraphrased as "RA type determination."

### <Semi-Static RA Type Switching>

As described above, the UE may be notified of the RA type information (for example, the RRC IE "resourceAllocation") indicating the RA type by higher layer signaling (for example, RRC signaling).

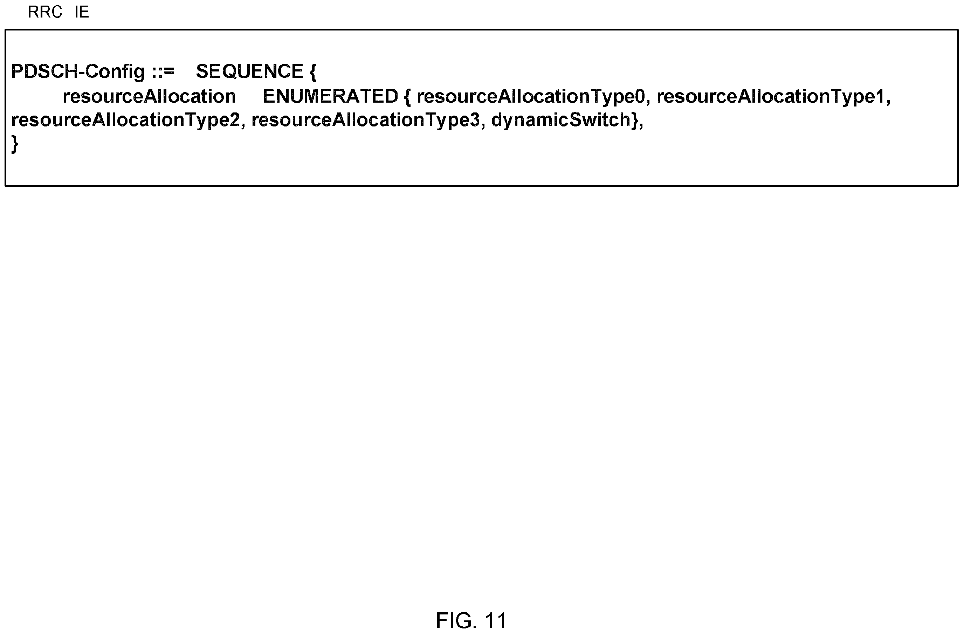

In the third aspect, the RA type information may at least indicate RA type 0 (resourceAllocationType0), RA type 1 (resourceAllocationType1), RA type 2 (resourceAllocationType2), and RA type 3 (resourceAllocationType3). Further, the RA type information may indicate the dynamic switching (dynamicSwitch). For example, in Fig. 11, the RA type information may indicate RA type 0, 1, 2, or 3, or the dynamic switching.

As described above, since the RA type information can indicate RA type 2 or 3, switching between at least two of RA types 0 to 3 can be appropriately controlled even in a case where RA types 2 and 3 are newly introduced in addition to the existing RA types 0 and 1.

For example, when the traffic type is switched from the eMBB to the URLLC, the RA type can also be switched to the RA type for the URLLC (for example, RA type 2 or 3) by performing RRC reconfiguration.

### <Dynamic RA Type Switching>

The RA type may be dynamically indicated based on the RA type information (for example, the RRC IE "resourceAllocation") and the DCI, or may be indicated based on the DCI regardless of the RA type information.

In a case where the RA type information indicates the dynamic switching (for example, dynamicswitch) of the RA type, the UE may determine the RA type based on some bits (for example, a given number of MSBs or LSBs) of a given field (for example, the FDRA field) in the DCI. The some bits may be included in the given field in a case where the RA type information indicates the dynamic switching of the RA type.

Alternatively, regardless of the RA type information, the UE may determine the RA type based on some bits (for example, a given number of MSBs or LSBs) of a given field (for example, the FDRA field) in the DCI. The some bits may be included in the given field regardless of whether or not the RA type information indicates the dynamic switching of the RA type. That is, the RA type specified by the RA type information may be overwritten with the RA type specified by the some bits.

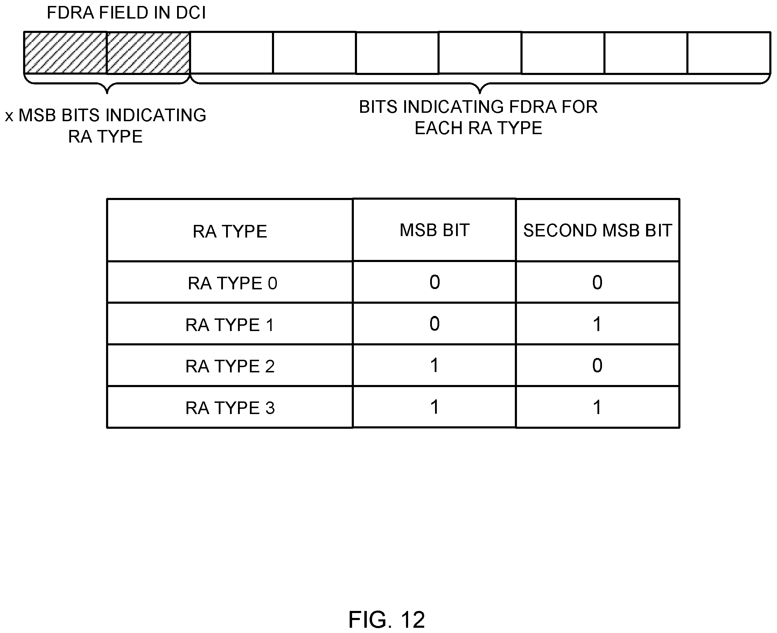

Fig. 12 is a diagram illustrating an example of dynamic RA type determination according to the third aspect. In Fig. 12, the RA type information may or does not have to indicate the dynamic switching of the RA type.

For example, in Fig. 12, a given number of MSBs (here, the MSB and the second MSB) of a given field (here, the FDRA field) in the DCI may specify the RA type. Note that the given number of MSBs is not limited to two bits, and may be changed according to the number of specified RA types.

As illustrated in Fig. 12, values "00," "01," "10," and "11" of the MSB and the second MSB may indicate RA types 0, 1, 2, and 3.

Note that the RA type may be specified by at least some bits of a field other than the FDRA field in the DCI.

As described above, the RA type is specified by at least some bits of a given field in the DCI, such that even in a case where the traffic type is dynamically switched from the MBB to the URLLC, the RA type can be quickly switched to the RA type for the URLLC (for example, RA type 2 or 3) .

### <Implicit RA Type Switching>

The RA type may be switched based on the implicit information (implicit RA type determination).

The implicit information may include, for example, at least one of the following:
- Scheduling condition (for example, at least one of the BWP size or RB allocation)
- DCI format
- Information regarding the MCS applied to the PDSCH (for example, the MCS index)
- Information regarding the PDCCH for scheduling the PDSCH (for example, at least one of the PDCCH monitoring occasion, the search space, or the CORESET)
- Information regarding the RNTI used for the CRC scrambling of the PDCCH

### <<BWP Size>>

Specifically, the RA type may be switched based on the size of the BWP to which the PDSCH is allocated. For example, in a case where the BWP size is less than (or equal to or less than) a given threshold (for example, 1 to 36 PRBs), the UE may determine RA type 0 or 2. On the other hand, in a case where the BWP size is equal to or more than the given threshold (for example, 145 to 275 PRBs), the UE may determine RA type 1 or 3.

According to RA type 0 and RA type 2 based on RA type 0, the FDRA can be performed with a smaller bit width (the number of bits) in a case of a smaller BWP size. According to RA type 1 and RA type 3 based on RA type 1, the FDRA can be performed with a smaller bit width in a case of a larger BWP size. Therefore, the bit width required for the FDRA can be reduced.

### <<RB Allocation>>

In addition, the RA type may be switched based on allocation of RBs of different traffic types. For example, when the PDSCHs of different traffic types are transmitted (multiplexed) within the same time unit (for example, a slot), the RA type of the FDRA for the PDSCH may be switched so as to reduce the number of RBs unavailable for the PDSCH.

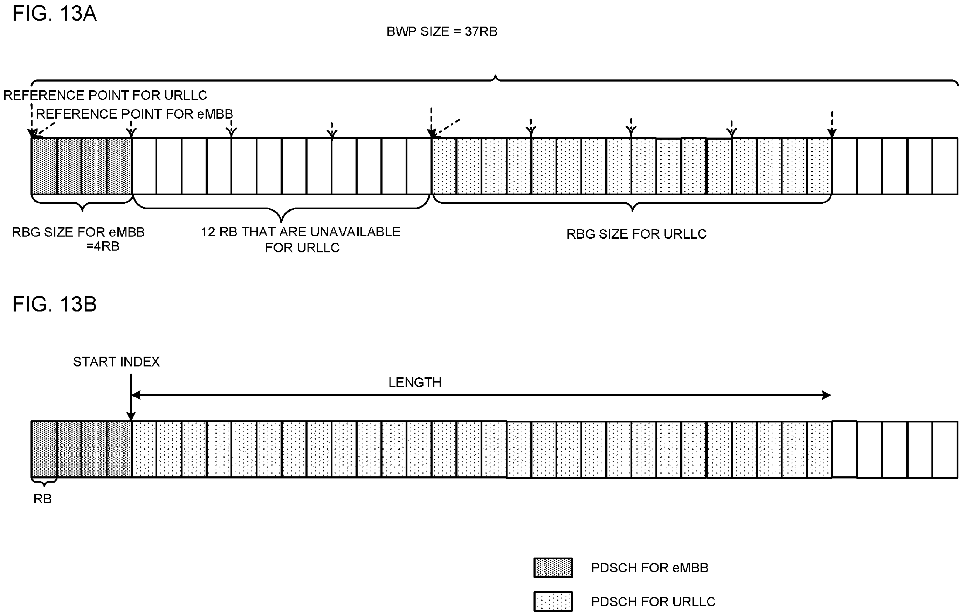

Figs. 13A and 13B are diagrams illustrating an example of the implicit RA type switching according to the third aspect. Fig. 13A illustrates an example of a case where, for example, in the BWP with the BWP size of 37 RBs, the PDSCHs of different traffic types (for example, the URLLC and the eMBB) are multiplexed in the same time unit (for example, a slot).

For example, in Fig. 13A, it is assumed that an RBG size configuration 0 of RA type 0 is applied for the PDSCH associated with the eMBB. Here, since the BWP size = 37 RBs, the RBG size is 4 (see Fig. 1A).

In addition, in Fig. 13A, it is assumed that the RBG size configuration 2 of RA type 2 is applied for the PDSCH associated with the URLLC. Here, since the BWP size = 37 RBs, the RBG size is 2 (see Fig. 4A).

As illustrated in Fig. 13A, in a case of using RA type 2 for the PDSCH associated with the URLLC, the RBG size is larger than that of RA type 1. Therefore, the number of reference points for the URLLC (a boundary between the RBGs for the URLLC) is smaller than the number of reference points for the eMBB (a boundary between the RBGs for the eMBB).

For example, in Fig. 13A, the reference point for the URLLC is provided for every 16 RBs in the BWP, whereas the reference point for the eMBB is provided for every four RBs. Therefore, as illustrated in Fig. 13A, in a case where the PDSCH for the eMBB is allocated to one RBG for the eMBB, the RBs (for example, in Fig. 13A, 12 RBs) that are unavailable for the URLLC may occur.

Therefore, in a case illustrated in Fig. 13A, the RA type for the PDSCH associated with the URLLC may be switched from RA type 2 to RA type 1. As illustrated in Fig. 13B, in RA type 1, the FDRA for the PDSCH is performed in units of RBs based on the index of the start RB and the length. Therefore, as illustrated in Fig. 13A, it is possible to avoid the occurrence of the RBs that are unavailable for the PDSCH for the ULRRC, and it is possible to improve efficiency in utilizing the frequency resources.

Note that the RA type for the PDSCH associated with the URLLC may be switched from RA type 2 to RA type 3. In this case, the RBG size of RA type 3 for the URLLC is desirably smaller than the RBG size of RA type 0 for the

### URLLC.

According to the third aspect, switching between the RA types can be appropriately controlled.

### (Other aspects)

The first to third aspects may be applied alone or at least two or more of them may be applied in combination. For example, in a case where the first and third aspects are combined, at least one of the RA type or the RBG size configuration of the RA type (for example, RA Type 0, 2, or 3) according to which the FDRA is performed in units of RBGs may be semi-statically or dynamically switched, or may be switched based on the implicit information.

In addition, the first to third aspects have been described for the FDRA for the PDSCH, but the same applies to the FDRA for the PUSCH. When applied to the PUSCH, reception of the PDSCH may be replaced with transmission of the PUSCH. Further, the DCI (for example, the DCI format 1_0, 1_1, or 1_x) used for scheduling the PDSCH may be replaced with the DCI (for example, DCI format 0_0, 0_1, or 0_x) used for scheduling the PUSCH.

In addition, the PDSCH may be dynamically scheduled by the DCI or may be scheduled by semi-persistent scheduling. In addition, the PUSCH may be dynamically scheduled by the DCI, or may be based on the configuration grant.

Further, in the present embodiment, the traffic type is not recognized in a physical layer, and different traffic types may be identified in the physical layer by at least one of the DCI format, the RNTI, the search space set, or the CORESET.

### (Radio Communication System)

Hereinafter, a configuration of a radio communication system according to one embodiment of the present disclosure will be described. In this radio communication system, communication is performed using one or a combination of the radio communication methods according to the embodiments of the present disclosure.

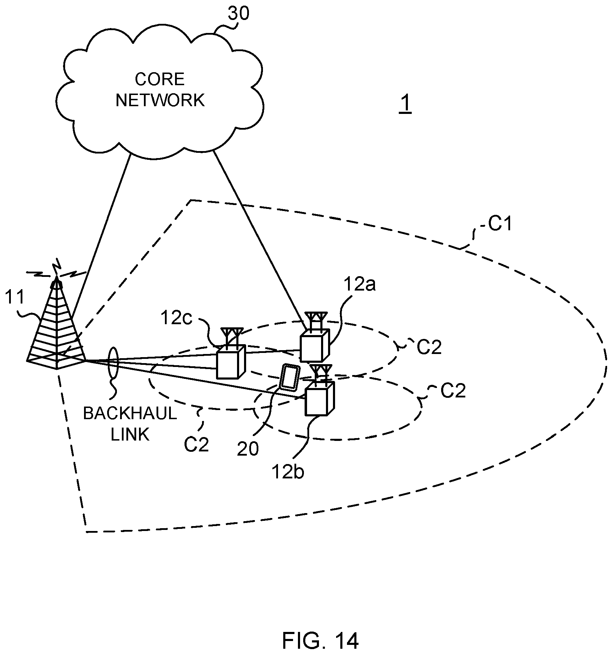

Fig. 14 is a diagram illustrating an example of a schematic configuration of the radio communication system according to one embodiment. A radio communication system 1 may be a system that implements communication using long term evolution (LTE), 5th generation mobile communication system New Radio (5G NR), and the like drafted as the specification by 3rd generation partnership project (3GPP).

Furthermore, the radio communication system 1 may support dual connectivity between a plurality of radio access technologies (RATs) (multi-RAT dual connectivity (MR-DC)). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is MN, and an LTE (E-UTRA) base station (eNB) is SN.

The radio communication system 1 may support dual connectivity between a plurality of base stations in the same RAT (for example, dual connectivity in which both MN and SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are arranged in the macro cell C1 and that form small cells C2 narrower than the macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively referred to as "base stations 10," unless these are distinguished from each other.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a first frequency range 1 (FR1) or a second frequency range 2 (FR2). The macro cell C1 may be included in FR1, and the small cell C2 may be included in FR2. For example, FR1 may be a frequency range of 6 GHz or less (sub-6 GHz), and FR2 may be a frequency range higher than 24 GHz (above-24 GHz). Note that the frequency ranges, definitions, and the like of the FR1 and FR2 are not limited thereto, and, for example, FR1 may correspond to a frequency range higher than FR2.

Further, the user terminal 20 may perform communication on each CC using at least one of time division duplex (TDD) or frequency division duplex (FDD).

The plurality of base stations 10 may be connected by wire (for example, an optical fiber, an X2 interface, or the like in compliance with common public radio interface (CPRI)) or by radio (for example, NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of evolved packet core (EPC), 5G core network (5GCN), next generation core (NGC), or the like.

The user terminal 20 may be a terminal corresponding to at least one of communication methods such as LTE, LTE-A, and 5G.

In the radio communication system 1, a radio access method based on orthogonal frequency division multiplexing (OFDM) may be used. For example, in at least one of downlink (DL) or uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The wireless access scheme may be referred to as a waveform. Note that, in the radio communication system 1, another wireless access scheme (for example, another single carrier transmission scheme or another multi-carrier transmission scheme) may be used for a wireless access scheme in the UL and the DL.

In the radio communication system 1, a downlink shared channel (physical downlink shared channel (PDSCH)) shared by the user terminals 20, a broadcast channel (physical broadcast channel (PBCH)), a downlink control channel (physical downlink control channel (PDCCH)), and the like may be used as downlink channels.

In the radio communication system 1, an uplink shared channel (physical uplink shared channel (PUSCH)) shared by each user terminal 20, an uplink control channel (physical uplink control channel (PUCCH)), a random access channel (physical random access channel (PRACH)), and the like may be used as uplink channels.

User data, higher layer control information, a system information block (SIB), and the like are transmitted on the PDSCH. User data, higher layer control information, and the like may be transmitted on the PUSCH. Furthermore, a master information block (MIB) may be transmitted on the PBCH.

Lower layer control information may be transmitted on the PDCCH. The lower layer control information may include, for example, downlink control information (DCI) including scheduling information of at least one of the PDSCH or the PUSCH.

Note that, the DCI that schedules the PDSCH may be referred to as DL assignment, DL DCI, or the like, and the DCI that schedules the PUSCH may be referred to as UL grant, UL DCI, or the like. Note that, the PDSCH may be replaced with DL data, and the PUSCH may be replaced with UL data.

A control resource set (CORESET) and a search space may be used to detect the PDSCH. The CORESET corresponds to a resource that searches for DCI. The search space corresponds to a search area and a search method for PDCCH candidates. One CORESET may be associated with one or a plurality of search spaces. The UE may monitor the CORESET associated with a certain given search space based on search space configuration.

One search space may correspond to a PDCCH candidate corresponding to one or a plurality of aggregation levels. One or a plurality of search spaces may be referred to as a search space set. Note that the terms "search space," "search space set," "search space configuration," "search space set configuration," "CORESET," "CORESET configuration," and the like in the present disclosure may be replaced with each other.

Uplink control information (UCI) including at least one of channel state information (CSI), delivery acknowledgement information (which may be referred to as, for example, hybrid automatic repeat request acknowledgement (HARQ-ACK), ACK/NACK, or the like), or scheduling request (SR) may be transmitted on the PUCCH. A random access preamble for establishing connection with a cell may be transmitted on the PRACH.

Note that, in the present disclosure, downlink, uplink, and the like may be expressed without "link." Furthermore, various channels may be expressed without adding "physical" at the beginning thereof.

In the radio communication system 1, a synchronization signal (SS), a downlink reference signal (DL-RS), and the like may be transmitted. In the radio communication system 1, a cell-specific reference signal (CRS), a channel state information reference signal (CSI-RS), a demodulation reference signal (DMRS), a positioning reference signal (PRS), a phase tracking reference signal (PTRS), or the like may be transmitted as the DL-RS.

The synchronization signal may be, for example, at least one of a primary synchronization signal (PSS) or a secondary synchronization signal (SSS). A signal block including the SS (PSS or SSS) and the PBCH (and the DMRS for the PBCH) may be referred to as an SS/PBCH block, an SS block (SSB), or the like. Note that, the SS, the SSB, or the like may also be referred to as a reference signal.

Furthermore, in the radio communication system 1, a measurement reference signal (sounding reference signal (SRS)), a demodulation reference signal (DMRS), or the like may be transmitted as an uplink reference signal (UL-RS). Note that, the DMRS may also be referred to as a user terminal-specific reference signal (UE-specific reference signal).

### (Base Station)

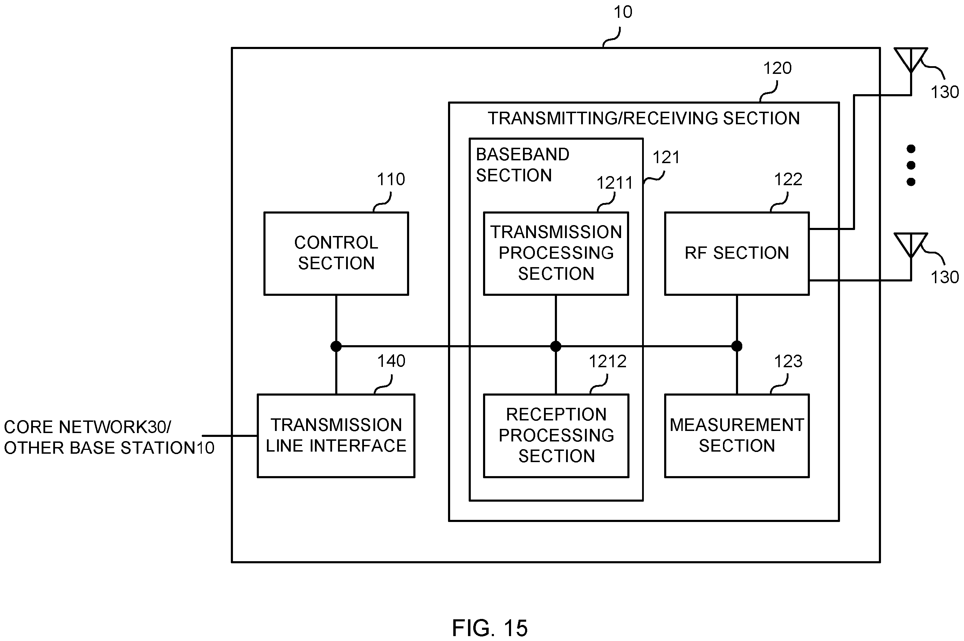

Fig. 15 is a diagram illustrating an example of a configuration of the base station according to one embodiment. The base station 10 includes a control section 110, a transmitting/receiving section 120, a transmitting/receiving antenna 130, and a transmission line interface 140. Note that one or more control sections 110, one or more transmitting/receiving sections 120, one or more transmitting/receiving antennas 130, and one or more transmission line interfaces 140 may be provided.

Note that, although this example mainly describes functional blocks of a characteristic part of the present embodiment, it may be assumed that the base station 10 includes other functional blocks that are necessary for radio communication as well. A part of processing performed by each section described below may be omitted.

The control section 110 controls the entire base station 10. The control section 110 can include a controller, a control circuit, and the like that are described based on common recognition in the technical field related to the present disclosure.

The control section 110 may control signal generation, scheduling (for example, resource allocation or mapping), and the like. The control section 110 may control transmission/reception, measurement, and the like using the transmitting/receiving section 120, the transmitting/receiving antenna 130, and the transmission line interface 140. The control section 110 may generate data to be transmitted as a signal, control information, a sequence, and the like, and may transfer the data, the control information, the sequence, and the like to the transmitting/receiving section 120. The control section 110 may perform call processing (such as configuration or release) of a communication channel, state management of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can include a transmitter/receiver, an RF circuit, a baseband circuit, a filter, a phase shifter, a measurement circuit, a transmitting/receiving circuit, and the like that are described based on common recognition in the technical field related to the present disclosure.

The transmitting/receiving section 120 may be constituted as an integrated transmitting/receiving section, or may be constituted by a transmitting section and a receiving section. The transmitting section may be constituted by the transmission processing section 1211 and the RF section 122. The receiving section may be constituted by the reception processing section 1212, the RF section 122, and the measurement section 123.

The transmitting/receiving antenna 130 can include an antenna described based on common recognition in the technical field related to the present disclosure, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a transmission beam or a reception beam by using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like on, for example, data, control information, and the like acquired from the control section 110, to generate a bit string to be transmitted.

The transmitting/receiving section 120 (transmission processing section 1211) may perform transmission processing such as channel coding (which may include error correction coding), modulation, mapping, filtering processing, discrete Fourier transform (DFT) processing (if necessary), inverse fast Fourier transform (IFFT) processing, precoding, or digital-analog conversion on the bit string to be transmitted, to output a baseband signal.

The transmitting/receiving section 120 (RF section 122) may perform modulation to a radio frequency range, filtering processing, amplification, and the like on the baseband signal, to transmit a signal in the radio frequency range via the transmitting/receiving antenna 130.

Meanwhile, the transmitting/receiving section 120 (RF section 122) may perform amplification, filtering processing, demodulation to a baseband signal, and the like on the signal in the radio frequency range received by the transmitting/receiving antenna 130.

The transmitting/receiving section 120 (reception processing section 1212) may apply reception processing such as analog-digital conversion, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 120 (measurement section 123) may perform measurement on the received signal. For example, the measurement section 123 may perform radio resource management (RRM), channel state information (CSI) measurement, and the like based on the received signal. The measurement section 123 may measure received power (for example, reference signal received power (RSRP)), received quality (for example, reference signal received quality (RSRQ), a signal to interference plus noise ratio (SINR), or a signal to noise ratio (SNR)), signal strength (for example, received signal strength indicator (RSSI)), propagation path information (for example, CSI), and the like. The measurement result may be output to the control section 110.

The transmission line interface 140 may perform transmission/reception of a signal (backhaul signaling) to/from an apparatus included in the core network 30, another base station 10, or the like, and may perform acquisition, transmission, or the like of user data (user plane data), control plane data, and the like for the user terminal 20.

Note that, the transmitting section and the receiving section of the base station 10 in the present disclosure may be constituted by at least one of the transmitting/receiving section 120, the transmitting/receiving antenna 130, or the transmission line interface 140.

Note that the transmitting/receiving section 120 may transmit information (RBG size information) indicating a configuration used for determining the size of the resource block group (RBG) used for the frequency domain resource allocation for the downlink shared channel or the uplink shared channel, commonly or individually for a plurality of traffic types.

The transmitting/receiving section 120 may transmit the downlink control information. The transmitting/receiving section 120 may transmit the downlink shared channel. The transmitting/receiving section 220 may receive the uplink shared channel. Further, the transmitting/receiving section 120 may transmit the information (RA type information) indicating the resource allocation type.

Each configuration may be associated with the sizes of one or more RBGs commonly or individually for the plurality of traffic types. The control section 110 may determine the size of the RBG corresponding to the size of the bandwidth part (BWP) to which the downlink shared channel or the uplink shared channel is allocated, among the sizes of the one or more RBGs associated with the configuration indicated by the RBG size information (the semi-static RBG size determination of the first aspect).

The control section 110 may determine the size of the RBG based on at least one of the RBG size information, the downlink control information used for scheduling the downlink shared channel or the uplink shared channel, or the implicit information (the dynamic RBG size determination or the implicit RBG size determination of the first aspect).

The control section 110 may determine the size of the RBG commonly or individually for a plurality of resource allocation types using the RBG as the scheduling unit (second aspect).

The control section 110 may control switching between the resource allocation types of the downlink shared channel or the uplink shared channel based on at least one of information indicating the resource allocation type (RA type information), the downlink control information used for scheduling the downlink shared channel or the uplink shared channel, or the implicit information (third aspect).

### (User Terminal)

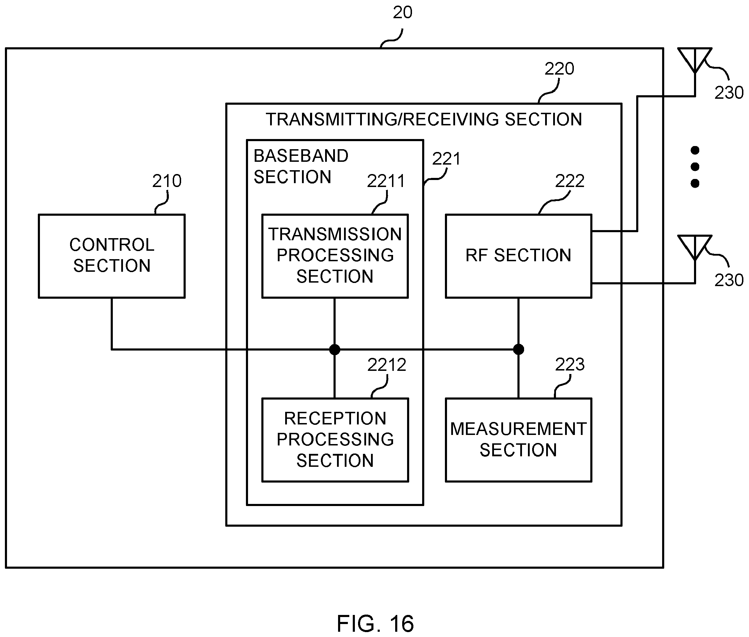

Fig. 16 is a diagram illustrating an example of a configuration of the user terminal according to one embodiment. The user terminal 20 includes a control section 210, a transmitting/receiving section 220, and a transmitting/receiving antenna 230. Note that one or more control sections 210, one or more transmitting/receiving sections 220, and one or more transmitting/receiving antennas 230 may be provided.

Note that, although this example mainly describes functional blocks of a characteristic part of the present embodiment, it may be assumed that the user terminal 20 includes other functional blocks that are necessary for radio communication as well. A part of processing performed by each section described below may be omitted.

The control section 210 controls the entire user terminal 20. The control section 210 can include a controller, a control circuit, and the like, which are described based on common recognition in the technical field related to the present disclosure.

The control section 210 may control signal generation, mapping, and the like. The control section 210 may control transmission/reception, measurement, and the like using the transmitting/receiving section 220 and the transmitting/receiving antenna 230. The control section 210 may generate data to be transmitted as a signal, control information, a sequence, and the like, and may transfer the data, the control information, the sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmitter/receiver, an RF circuit, a baseband circuit, a filter, a phase shifter, a measurement circuit, a transmitting/receiving circuit, and the like, which are described based on common recognition in the technical field related to the present disclosure.

The transmitting/receiving section 220 may be configured as an integrated transmitting/receiving section, or may include a transmitting section and a receiving section. The transmitting section may include the transmission processing section 2211 and the RF section 222. The receiving section may include the reception processing section 2212, the RF section 222, and the measurement section 223.

The transmitting/receiving antenna 230 can include an antenna, which is described based on common recognition in the technical field related to the present disclosure, for example, an array antenna.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a transmission beam or a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like on, for example, data, control information, or the like acquired from the control section 210 to generate a bit string to be transmitted.

The transmitting/receiving section 220 (transmission processing section 2211) may perform transmission processing such as channel coding (which may include error correction coding), modulation, mapping, filtering processing, DFT processing (if necessary), IFFT processing, precoding, or digital-analog conversion on the bit string to be transmitted, to output a baseband signal.

Note that whether or not to apply DFT processing may be determined based on configuration of transform precoding. When transform precoding is enabled for a channel (for example, PUSCH), the transmitting/receiving section 220 (transmission processing section 2211) may perform DFT processing as the above-described transmission processing in order to transmit the channel by using a DFT-s-OFDM waveform, and if not, the DFT processing does not have to be performed as the transmission processing.

The transmitting/receiving section 220 (RF section 222) may perform modulation to a radio frequency range, filtering processing, amplification, and the like on the baseband signal, and may transmit a signal in the radio frequency range via the transmitting/receiving antenna 230.

Meanwhile, the transmitting/receiving section 220 (RF section 222) may perform amplification, filtering processing, demodulation to a baseband signal, and the like on the signal in the radio frequency range received by the transmitting/receiving antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal to acquire user data and the like.

The transmitting/receiving section 220 (measurement section 223) may perform measurement on the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

Note that the transmitting section and the receiving section of the user terminal 20 in the present disclosure may include at least one of the transmitting/receiving section 220, the transmitting/receiving antenna 230, or the transmission line interface 240.

Note that the transmitting/receiving section 220 may receive information (RBG size information) indicating a configuration used for determining the size of the resource block group (RBG) used for the frequency domain resource allocation for the downlink shared channel or the uplink shared channel, commonly or individually for a plurality of traffic types.

The transmitting/receiving section 220 may receive the downlink control information. The transmitting/receiving section 220 may receive the downlink shared channel. The transmitting/receiving section 220 may transmit the uplink shared channel. Further, the transmitting/receiving section 220 may receive the information (RA type information) indicating the resource allocation type.

The control section 210 may determine the size of the RBG based on the configuration (RBG size configuration) or the information (RBG size information). Each configuration may be associated with the sizes of one or more RBGs commonly or individually for the plurality of traffic types. The control section 210 may determine the size of the RBG corresponding to the size of the bandwidth part (BWP) to which the downlink shared channel or the uplink shared channel is allocated, among the sizes of the one or more RBGs associated with the configuration indicated by the RBG size information (the semi-static RBG size determination of the first aspect).

The control section 210 may determine the size of the RBG based on at least one of the RBG size information, the downlink control information used for scheduling the downlink shared channel or the uplink shared channel, or the implicit information (the dynamic RBG size determination or the implicit RBG size determination of the first aspect).

The control section 210 may determine the size of the RBG commonly or individually for a plurality of resource allocation types using the RBG as the scheduling unit (second aspect).

The control section 210 may control switching between the resource allocation types of the downlink shared channel or the uplink shared channel based on at least one of information indicating the resource allocation type (RA type information), the downlink control information used for scheduling the downlink shared channel or the uplink shared channel, or the implicit information (third aspect).

### (Hardware Configuration)

Note that the block diagrams that have been used to describe the above embodiments illustrate blocks in functional units. These functional blocks (components) may be implemented in arbitrary combinations of at least one of hardware or software. Further, the method for implementing each functional block is not particularly limited. That is, each functional block may be implemented by a single apparatus physically or logically aggregated, or may be implemented by directly or indirectly connecting two or more physically or logically separate apparatuses (in a wired manner, a wireless manner, or the like, for example) and using these apparatuses. The functional blocks may be implemented by combining software with the above-described single apparatus or the above-described plurality of apparatuses.

Here, the function includes, but is not limited to, determining, judging, calculating, computing, processing, deriving, investigating, searching, ascertaining, receiving, transmitting, outputting, accessing, solving, selecting, choosing, establishing, comparing, assuming, expecting, regarding, broadcasting, notifying, communicating, forwarding, configuring, reconfiguring, allocating, mapping, assigning, and the like. For example, a functional block (component) that has a transmission function may be referred to as a transmitting section (transmitting unit), a transmitter, and the like. In any case, as described above, the implementation method is not particularly limited.

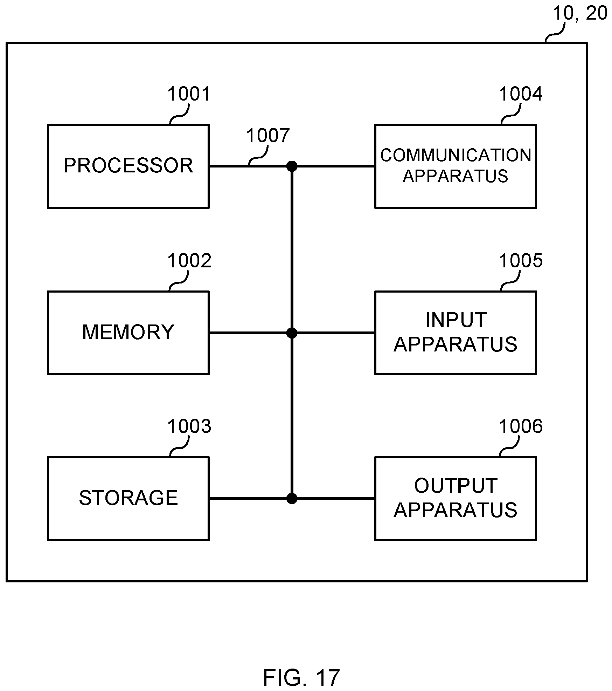

For example, the base station, the user terminal, or the like according to one embodiment of the present disclosure may function as a computer that executes the processing of the radio communication method in the present disclosure. Fig. 17 is a diagram illustrating an example of a hardware configuration of the base station and the user terminal according to one embodiment. Physically, the above-described base station 10 and user terminal 20 may be configured as a computer apparatus that includes a processor 1001, a memory 1002, a storage 1003, a communication apparatus 1004, an input apparatus 1005, an output apparatus 1006, a bus 1007, and the like.

Note that in the present disclosure, the terms such as an apparatus, a circuit, a device, a section, or a unit can be replaced with each other. The hardware configuration of the base station 10 and the user terminal 20 may include one or more of each of the apparatuses illustrated in the drawings, or does not have to include some apparatuses.

For example, although only one processor 1001 is illustrated, a plurality of processors may be provided. Further, the processing may be executed by one processor, or the processing may be executed by two or more processors in sequence or by using other methods. Note that the processor 1001 may be implemented by one or more chips.

Each of functions of the base station 10 and the user terminal 20 is implemented by causing given software (program) to be read on hardware such as the processor 1001 or the memory 1002 to thereby cause the processor 1001 to perform operation, control communication via the communication apparatus 1004, and control at least one of reading or writing of data from or in the memory 1002 and the storage 1003.

The processor 1001 may control the entire computer by operating, for example, an operating system. The processor 1001 may be configured by a central processing unit (CPU) including an interface with peripheral equipment, a control apparatus, an operation apparatus, a register, and the like. For example, at least a part of the above-described control section 110 (210), transmitting/receiving section 120 (220), and the like may be implemented by the processor 1001.

Furthermore, the processor 1001 reads programs (program code), software modules, data, and so on from at least one of the storage 1003 or the communication apparatus 1004 into the memory 1002, and executes various processing according to these. As the program, a program that causes a computer to execute at least a part of the operation described in the above-described embodiment is used. For example, the control section 110 (210) may be implemented by a control program that is stored in the memory 1002 and that operates on the processor 1001, and other functional blocks may be implemented likewise.

The memory 1002 is a computer-readable recording medium, and may include, for example, at least one of a read only memory (ROM), an erasable programmable ROM (EPROM), an electrically EPROM (EEPROM), a random access memory (RAM) or other appropriate storage media. The memory 1002 may be referred to as a register, a cache, a main memory (primary storage apparatus), and the like. The memory 1002 can store a program (program code), a software module, and the like, which are executable for implementing the radio communication method according to one embodiment of the present disclosure.

The storage 1003 is a computer-readable recording medium, and may include, for example, at least one of a flexible disk, a floppy (registered trademark) disk, a magneto-optical disk (for example, a compact disc ROM (CD-ROM) and the like), a digital versatile disc, a Blu-ray (registered trademark) disk), a removable disk, a hard disk drive, a smart card, a flash memory device (for example, a card, a stick, or a key drive), a magnetic stripe, a database, a server, or other appropriate storage media. The storage 1003 may be referred to as "secondary storage apparatus."

The communication apparatus 1004 is hardware (transmitting/receiving device) for performing inter-computer communication via at least one of a wired network or a wireless network, and for example, is referred to as "network device," "network controller," "network card," "communication module," and the like. The communication apparatus 1004 may include a high frequency switch, a duplexer, a filter, a frequency synthesizer, and the like in order to implement, for example, at least one of frequency division duplex (FDD) or time division duplex (TDD). For example, the transmitting/receiving section 120 (220), the transmitting/receiving antenna 130 (230), and the like described above may be implemented by the communication apparatus 1004. The transmitting/receiving section 120 (220) may be implemented in a physically or logically separated manner by the transmitting section 120a (220a) and the receiving section 120b (220b).

The input apparatus 1005 is an input device that receives input from the outside (for example, a keyboard, a mouse, a microphone, a switch, a button, a sensor, or the like). The output apparatus 1006 is an output device that performs output to the outside (for example, a display, a speaker, a light emitting diode (LED) lamp, or the like). Note that the input apparatus 1005 and the output apparatus 1006 may be integrated with each other (for example, a touch panel).

Further, these apparatuses such as the processor 1001 and the memory 1002 are connected to each other by the bus 1007 to communicate information. The bus 1007 may be configured by using a single bus, or may be configured by using a different bus for each apparatus.

Further, the base station 10 and the user terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented with the hardware. For example, the processor 1001 may be implemented with at least one of these pieces of hardware.

### (Modification)

Note that terms described in the present disclosure and terms necessary for understanding the present disclosure may be replaced with terms that have the same or similar meanings. For example, a channel, a symbol, and a signal (signal or signaling) may be interchangeable. Further, the signal may be a message. The reference signal can be abbreviated as an RS, and may be referred to as a pilot, a pilot signal, and the like, depending on which standard applies. Further, a component carrier (CC) may be referred to as a cell, a frequency carrier, a carrier frequency, and the like.

A radio frame may include one or more durations (frames) in the time domain. Each of the one or more periods (frames) included in the radio frame may be referred to as a subframe. Further, the subframe may include one or more slots in the time domain. The subframe may be a fixed time duration (for example, 1 ms) that is not dependent on numerology.

Here, the numerology may be a communication parameter applied to at least one of transmission or reception of a certain signal or channel. For example, the numerology may indicate at least one of subcarrier spacing (SCS), a bandwidth, a symbol length, a cyclic prefix length, a transmission time interval (TTI), the number of symbols per TTI, a radio frame configuration, particular filtering processing performed by a transceiver in the frequency domain, particular windowing processing performed by a transceiver in the time domain, and the like.

The slot may include one or more symbols in the time domain (orthogonal frequency division multiplexing (OFDM) symbols, single carrier frequency division multiple access (SC-FDMA) symbols, and the like). Also, the slot may be a time unit based on the numerology.

The slot may include a plurality of mini slots. Each mini slot may include one or more symbols in the time domain. Further, the mini slot may be referred to as a sub-slot. Each mini slot may include fewer symbols than the slot. A PDSCH (or PUSCH) transmitted in a time unit larger than the mini slot may be referred to as "PDSCH (PUSCH) mapping type A." A PDSCH (or PUSCH) transmitted using the mini slot may be referred to as "PDSCH (PUSCH) mapping type B."

The radio frame, the subframe, the slot, the mini slot, and the symbol all represent the time unit in signal communication. The radio frame, the subframe, the slot, the mini slot, and the symbol may be called by other applicable names, respectively. Note that time units such as the frame, the subframe, the slot, the mini slot, and the symbol in the present disclosure may be interchangeable.

For example, one subframe may be referred to as a TTI, a plurality of consecutive subframes may be referred to as a TTI, or one slot or one mini slot may be referred to as a TTI. That is, at least one of the subframe or the TTI may be a subframe (1 ms) in the existing LTE, may be a period shorter than 1 ms (for example, one to thirteen symbols), or may be a period longer than 1 ms. Note that the unit to represent the TTI may be referred to as a "slot," a "mini slot" and the like, instead of a "subframe."

Here, the TTI refers to the minimum time unit of scheduling in radio communication, for example. For example, in the LTE system, a base station performs scheduling to allocate radio resources (a frequency bandwidth and transmission power that can be used in each user terminal and the like) to each user terminal in TTI units. Note that the definition of the TTI is not limited thereto.

The TTI may be the transmission time unit of channel-encoded data packets (transport blocks), code blocks, codewords, or the like, or may be the unit of processing in scheduling, link adaptation, or the like. Note that when the TTI is given, a time interval (for example, the number of symbols) in which the transport block, the code block, the codeword, or the like is actually mapped may be shorter than the TTI.

Note that, when one slot or one mini slot is referred to as a "TTI," one or more TTIs (that is, one or more slots or one or more mini slots) may be the minimum time unit of scheduling. Also, the number of slots (the number of mini slots) to constitute this minimum time unit of scheduling may be controlled.

A TTI having a time duration of 1 ms may also be referred to as a usual TTI (TTI in 3GPP Rel. 8 to 12), a normal TTI, a long TTI, a usual subframe, a normal subframe, a long subframe, a slot, or the like. A TTI shorter than the usual TTI may be referred to as a shortened TTI, a short TTI, a partial TTI (or fractional TTI), a shortened subframe, a short subframe, a mini slot, a sub-slot, a slot, or the like.

Note that the long TTI (for example, the usual TTI, subframe, or the like) may be replaced with a TTI having a time duration exceeding 1 ms, and the short TTI (for example, the shortened TTI or the like) may be replaced with a TTI having a TTI length less than the TTI length of the long TTI and not less than 1 ms.

A resource block (RB) is the unit of resource allocation in the time domain and the frequency domain, and may include one or more contiguous subcarriers in the frequency domain. The number of subcarriers included in the RB may be the same regardless of the numerology, and may be twelve, for example. The number of subcarriers included in the RB may be determined based on the numerology.

Also, the RB may include one or more symbols in the time domain, and may be one slot, one mini slot, one subframe, or one TTI in length. One TTI, one subframe, and the like each may include one or more resource blocks.

Note that one or more RBs may be referred to as a physical resource block (PRB), a subcarrier group (SCG), a resource element group (REG), a PRB pair, an RB pair, and the like.

Furthermore, a resource block may include one or more resource elements (REs). For example, one RE may be a radio resource field of one subcarrier and one symbol.

A bandwidth part (BWP) (which may be referred to as a partial bandwidth or the like) may represent a subset of contiguous common resource blocks (RBs) for a certain numerology in a certain carrier. Here, the common RB may be specified by the index of the RB based on a common reference point of the carrier. The PRB may be defined in a certain BWP and be numbered within the BWP.

The BWP may include a BWP for UL (UL BWP) and a BWP for DL (DL BWP). For the UE, one or more BWPs may be configured within one carrier.

At least one of the configured BWPs may be active, and the UE does not need to assume to transmit or receive a given signal/channel outside the active BWP. Note that "cell," "carrier," and the like in the present disclosure may be replaced with "BWP."

Note that structures of the radio frame, subframe, slot, mini slot, symbol, and the like described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol duration, the length of cyclic prefix (CP), and the like can be variously changed.

Furthermore, information, a parameter, or the like described in the present disclosure may be represented in absolute values, represented in relative values with respect to given values, or represented by using another corresponding information. For example, a radio resource may be specified by a given index.

Names used for the parameters and the like in the present disclosure are not restrictive names in any respect. Further, any mathematical expression or the like that uses these parameters may differ from those explicitly disclosed in the present disclosure. Since various channels (PUCCH, PDCCH, and the like) and information elements can be identified by any suitable names, various names assigned to these various channels and information elements are not restrictive names in any respect.

The information, signals, and the like described in the present disclosure may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Further, information, signals and the like can be output in at least one of a direction from higher layers to lower layers or a direction from lower layers to higher layers. Information, signals and the like may be input and output via a plurality of network nodes.

The information, signals and the like that are input and output may be stored in a specific location (for example, in a memory), or may be managed in a control table. The information, signals and the like to be input and output can be overwritten, updated or appended. The output information, signals, and the like may be deleted. The information, signals and the like that are input may be transmitted to other apparatuses.

Notification of information may be performed not only by using the aspects/embodiments described in the present disclosure but also using another method. For example, the notification of information in the present disclosure may be performed by using physical layer signaling (for example, downlink control information (DCI) or uplink control information (UCI)), higher layer signaling (for example, radio resource control (RRC) signaling, broadcast information (master information block (MIB)), system information block (SIB), or the like), or medium access control (MAC) signaling), another signal, or a combination thereof.

Note that the physical layer signaling may be referred to as Layer 1/Layer 2 (L1/L2) control information (L1/L2 control signal), L1 control information (L1 control signal), and the like. Further, the RRC signaling may be referred to as an RRC message, and may be, for example, an RRC connection setup message, an RRC connection reconfiguration message, and the like. Further, notification of the MAC signaling may be performed using, for example, an MAC control element (CE).

Further, notification of given information (for example, notification of "being X") is not limited to explicit notification but may be performed implicitly (for example, by not performing notification of the given information or by performing notification of another piece of information).

Judging may be made in values represented by one bit (0 or 1), may be made in Boolean values that represent true or false, or may be made by comparing numerical values (for example, comparison with a given value).

Regardless of whether or not being referred to as software, firmware, middleware, a microcode, or a hardware description language, or other names, software should be widely interpreted so as to mean an instruction, an instruction set, a code, a code segment, a program code, a program, a subprogram, a software module, an application, a software application, a software package, a routine, a subroutine, an object, an executable file, an execution thread, a procedure, a function, and the like.

Further, the software, instruction, information, and the like may be transmitted and received via a transmission medium. For example, when software is transmitted from a website, a server, or another remote source by using at least one of a wired technology (coaxial cable, optical fiber cable, twisted pair, digital subscriber line (DSL), or the like) and a wireless technology (infrared rays, microwaves, and the like), at least one of the wired technology and the wireless technology is included within the definition of a transmission medium.

The terms "system" and "network" used in the present disclosure can be used interchangeably. The "network" may mean an apparatus (for example, a base station) included in the network.

In the present disclosure, terms such as "precoding," "precoder," "weight (precoding weight)," "quasi-co-location (QCL)," "transmission configuration indication state (TCI state)," "spatial relation," "spatial domain filter," "transmission power," "phase rotation," "antenna port," "antenna port group," "layer," "number of layers," "rank," "resource," "resource set," "resource group," "beam," "beam width," "beam angle," "antenna," "antenna element," and "panel" can be used interchangeably.

In the present disclosure, terms such as "base station (BS)," "radio base station," "fixed station," "NodeB," "eNodeB (eNB)," "gNodeB (gNB)," "access point," "transmission point (TP)," "reception point (RP)," "transmission/reception point (TRP)," "panel," "cell," "sector," "cell group," "carrier," and "component carrier," can be used interchangeably. The base station may be referred to as a term such as a macro cell, a small cell, a femto cell, or a pico cell.

The base station can accommodate one or more (for example, three) cells. In a case where the base station accommodates a plurality of cells, the entire coverage area of the base station can be partitioned into a plurality of smaller areas, and each smaller area can provide communication services through a base station subsystem (for example, small remote radio head (RRH) for indoors). The term "cell" or "sector" refers to a part or the whole of a coverage area of at least one of a base station or a base station subsystem that performs a communication service in this coverage.

In the present disclosure, the terms such as mobile station (MS)," "user terminal," "user equipment (UE)," and "terminal" can be used interchangeably.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station or the mobile station may be referred to as a transmitting apparatus, a receiving apparatus, a radio communication apparatus, and the like. Note that at least one of the base station or the mobile station may be a device mounted on a moving object, a moving object itself, and the like. The moving object may be a transportation (for example, a car, an airplane, or the like), an unmanned moving object (for example, a drone, an autonomous car, or the like), or a (manned or unmanned) robot. Note that at least one of the base station or the mobile station also includes an apparatus that does not necessarily move during a communication operation. For example, at least one of the base station or the mobile station may be an Internet of Things (IoT) device such as a sensor.

Further, the base station in the present disclosure may be replaced with the user terminal. For example, each aspect/embodiment of the present disclosure may be applied to a configuration in which communication between the base station and the user terminal is replaced with communication among a plurality of user terminals (which may be referred to as, for example, device-to-device (D2D), vehicle-to-everything (V2X), and the like). In this case, the user terminal 20 may have the function of the above-described base station 10. Further, terms such as "uplink" and "downlink" may be replaced with terms corresponding to communication between terminals (for example, "side"). For example, the uplink channel, the downlink channel, and the like may be replaced with a side channel.

Similarly, the user terminal in the present disclosure may be replaced with a base station. In this case, the base station 10 may be configured to have the above-described functions of the user terminal 20.

In the present disclosure, an operation performed by a base station may be performed by an upper node thereof in some cases. In a network including one or more network nodes with base stations, it is clear that various operations performed for communication with a terminal can be performed by a base station, one or more network nodes (examples of which include but are not limited to mobility management entity (MME) and serving-gateway (S-GW)) other than the base station, or a combination thereof.

The aspects/embodiments illustrated in the present disclosure may be used individually or in combinations, which may be switched depending on the mode of implementation. Further, the order of processing procedures, sequences, flowcharts, and the like of the aspects/embodiments described in the present disclosure may be re-ordered as long as there is no inconsistency. For example, regarding the methods described in the present disclosure, elements of various steps are presented using an illustrative order, and are not limited to the presented specific order.

Each aspect/embodiment described in the present disclosure may be applied to a system using long term evolution (LTE), LTE-advanced (LTE-A), LTE-beyond (LTE-B), SUPER 3G, IMT-Advanced, 4th generation mobile communication system (4G), 5th generation mobile communication system (5G), future radio access (FRA), new radio access technology (RAT), new radio (NR), new radio access (NX), future generation radio access (FX), global system for mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system expanded based on these, and the like. Further, a plurality of systems may be combined and applied (for example, a combination of LTE or LTE-A and 5G, and the like).

The phrase "based on" as used in the present disclosure does not mean "based only on," unless otherwise specified. In other words, the phrase "based on" means both "based only on" and "based at least on."

Any reference to an element using designations such as "first" and "second" used in the present disclosure does not generally limit the amount or order of these elements. These designations can be used in the present disclosure, as a convenient way of distinguishing between two or more elements. In this way, reference to the first and second elements does not imply that only two elements may be employed, or that the first element must precede the second element in some way.

The term "determining" as used in the present disclosure may include a wide variety of operations. For example, "determining" may be regarded as judging, calculating, computing, processing, deriving, investigating, looking up, search, inquiry (for example, looking up in a table, database, or another data structure), ascertaining, and the like.

Furthermore, "determining" may be regarded as receiving (for example, receiving of information), transmitting (for example, transmitting of information), inputting, outputting, accessing (for example, accessing data in a memory), and the like.

Further, "determining" may be regarded as resolving, selecting, choosing, establishing, comparing, and the like. That is, "determining" may be regarded as a certain operation.

Furthermore, "determining" may be replaced with "assuming," "expecting," "considering," and the like.

The "maximum transmission power" described in the present disclosure may mean a maximum value of transmission power, the nominal UE maximum transmission power, or the rated UE maximum transmission power.

As used in the present disclosure, the terms "connected" and "coupled," or any variation of these terms, mean all direct or indirect connections or coupling between two or more elements, and may include the presence of one or more intermediate elements between two elements that are "connected" or "coupled" to each other. The coupling or connection between the elements may be physical, logical or a combination of these. For example, "connection" may be replaced with "access."

As used in the present disclosure, when two elements are connected, these elements may be considered to be "connected" or "coupled" to each other by using one or more electrical wires, cables, printed electrical connections, and the like, and, as some non-limiting and non-inclusive examples, by using electromagnetic energy and the like having wavelengths in the radio frequency, microwave, and optical (both visible and invisible) domains.

In the present disclosure, the phrase "A and B are different" may mean "A and B are different from each other." Note that the phrase may mean that "A and B are different from C." Terms such as "leave," "coupled," or the like may also be interpreted in the same manner as "different."

In a case where terms such as "include," "including," or a variation of these are used in the present disclosure, these terms are intended to be inclusive similarly to a case where "comprising" is used. Furthermore, the term "or" as used in the present disclosure is intended to be not an exclusive-OR.

In the present disclosure, when articles, such as "a," "an," and "the" are added in English translation, the present disclosure may include the plural forms of nouns that follow these articles.

Now, although the invention according to the present disclosure has been described in detail above, it is obvious to a person skilled in the art that the invention according to the present disclosure is by no means limited to the embodiments described in the present disclosure. The invention according to the present disclosure can be embodied with various corrections and in various modified aspects, without departing from the spirit and scope of the invention defined based on the description of claims. Thus, the description of the present disclosure is for the purpose of explaining examples and does not bring any limiting meaning to the invention according to the present disclosure.

## Claims

1. A terminal comprising:
a receiving section that receives information indicating a configuration used for determining a size of a resource block group (RBG) used for frequency domain resource allocation for a downlink shared channel or an uplink shared channel, commonly or individually for a plurality of traffic types; and
a control section that determines the size of the RBG based on the configuration.

2. The terminal according to claim 1, wherein
each configuration and sizes of one or more RBGs are associated commonly or individually for the plurality of traffic types, and
the control section determines the size of the RBG corresponding to a size of a bandwidth part (BWP) to which the downlink shared channel or the uplink shared channel is allocated, among the sizes of the one or more RBGs associated with the configuration indicated by the information.

3. The terminal according to claim 1 or 2, wherein
the control section determines the size of the RBG based on at least one of the configuration, downlink control information used for scheduling the downlink shared channel or the uplink shared channel, or implicit information.

4. The terminal according to any one of claims 1 to 3, wherein
the control section determines the size of the RBG commonly or individually for a plurality of resource allocation types using the RBG as a scheduling unit.

5. The terminal according to any one of claims 1 to 4, wherein
the control section controls switching between the resource allocation types based on at least one of information indicating the resource allocation type of the downlink shared channel or the uplink shared channel, the downlink control information used for scheduling the downlink shared channel or the uplink shared channel, or the implicit information.

6. A radio communication method of a terminal, comprising:
a step of receiving information indicating a configuration used for determining a size of a resource block group (RBG) used for frequency domain resource allocation for a downlink shared channel or an uplink shared channel, commonly or individually for a plurality of traffic types; and
a step of determining the size of the RBG based on the configuration.
